# EUROPEAN PATENT SPECIFICATION

(11) **EP 2 905 763 B1**
(45) Date of publication and mention of the grant of the patent: **01.09.2021**
(21) Application number: 13849260.8
(22) Date of filing: 16.10.2013
(51) Int. Cl.: G08C 17/02, G08C 23/04, G06F 3/0482

(54) **REMOTE CONTROL METHOD, REMOTE CONTROL DEVICE AND PRIMARY DEVICE**
FERNSTEUERUNGSVERFAHREN, FERNSTEUERUNGSVORRICHTUNG UND PRIMÄRVORRICHTUNG
PROCÉDÉ DE TÉLÉCOMMANDE, DISPOSITIF DE TÉLÉCOMMANDE ET DISPOSITIF PRIMAIRE

(30) Priority: 25.10.2012 CN 201210412862
(43) Date of publication of application: 12.08.2015
(73) Proprietor: Huawei Device Co., Ltd., Dongguan, Guangdong 523808 (CN)
(72) Inventor: FAN, Cunzhi, Shenzhen Guangdong 518129 (CN); ZHANG, Ling, Shenzhen Guangdong 518129 (CN); LIU, Zhi, Shenzhen Guangdong 518129 (CN); FANG, Liu, Shenzhen Guangdong 518129 (CN)
(74) Representative: Epping - Hermann - Fischer
(86) International application number: PCT/CN2013/085267
(87) International publication number: WO 2014/063583

(56) References cited:
- EP-A2- 1 271 938
- CN-A- 1 484 442
- CN-A- 1 487 703
- CN-A- 101 527 782
- CN-A- 101 753 903
- US-A- 5 500 794
- US-A- 5 767 919
- US-A1- 2010 060 506
- None

## Description

### TECHNICAL FIELD

The present invention relates to communications technologies, and in particular, to a remote control method and a master device.

### BACKGROUND

As televisions become more intelligent, more peripheral devices that work with the televisions emerge, such as a digital versatile disc (Digital Versatile Disc, DVD for short) player, a set top box, and a Blu-ray disc player. However, the foregoing peripheral devices need to work with a remote controller.

A design of an existing remote controller is relatively simple, and generally, each device has a dedicated remote controller. For example, the television has a remote controller of the television, the DVD player has a remote controller of the DVD player, the set top box has a remote controller of the set top box, and the Blu-ray disc player has a remote controller of the Blu-ray disc player. If a user uses a different device, a different remote controller is required, which is not convenient in operation; and in addition, a matching error easily occurs due to a large number of remote controllers, thereby resulting in low remote control efficiency during switching.

US 5,500,794 describes a distribution system and method for menu-driven user interface. Specifically, an apparatus for distributing control menus over a multi-channel distribution network such as CEBus throughout a home is presented.

EP 1271938 A1 refers to control of multiple AV-devices by a single master controller using infrared transmitted commands and bus transmitted commands.

US 2010/0060506 A1 describes a multimedia assembly with a programmable universal remote control unit which is configured to learn remote control codes from original remote control units.

### SUMMARY

A remote control method, a remote control device, and a master device are provided to improve efficiency of remote control on a device.

The invention is defined by the independent claims. Advantageous embodiments of the invention are given in the dependent claims. In the following, embodiments not falling within the scope of the claims are to be understood as examples useful for understanding the invention.

According to a first aspect, a remote control method is provided, including: receiving, by a master device, a main menu request instruction sent by a remote control device, and activating a main menu in the master device according to the main menu request instruction, where the main menu includes at least one submenu activation option, one submenu activation option corresponds to one peripheral device connected to the master device and is used to activate a peripheral submenu corresponding to the corresponding peripheral device, and the peripheral submenu includes at least one control sub-option that is used to perform function control on the peripheral device corresponding to the peripheral submenu; receiving, by the master device, a first remote control instruction that is sent by the remote control device and used to select the submenu activation option, and activating, according to the first remote control instruction, the peripheral submenu corresponding to the submenu activation option; and receiving, by the master device, a second remote control instruction that is sent by the remote control device and used to select the control sub-option in the activated peripheral submenu, and performing, according to the second remote control instruction, control on the peripheral device corresponding to the activated peripheral submenu. Therein, the performing, by the master device according to the second remote control instruction, control on the peripheral device corresponding to the activated peripheral submenu includes: sending, by the master device, the second remote control instruction to the peripheral device corresponding to the activated peripheral submenu, so as to control the peripheral device corresponding to the activated peripheral submenu to perform an action corresponding to the second remote control instruction; and receiving, by the master device, a remote control result that is returned by the peripheral device corresponding to the activated peripheral submenu, and displaying the remote control result by using the display screen of the master device.

In a first possible implementation manner of the first aspect, the main menu further includes at least one control option that is used to perform function control on the master device; and the remote control method further includes: receiving, by the master device, a third remote control instruction that is sent by the remote control device and used to select the control option, and performing control on the master device itself according to the third remote control instruction.

In a second possible implementation manner of the first aspect, the main menu further includes a main activation option that is used to activate a master submenu corresponding to the master device, and the master submenu includes at least one control sub-option that is used to perform function control on the master device; and the remote control method further includes: receiving, by the master device, a fourth remote control instruction that is sent by the remote control device and used to select the main activation option, and activating the master submenu according to the fourth remote control instruction; and receiving, by the master device, a fifth remote control instruction that is sent by the remote control device and used to select the control sub-option in the master submenu, and performing control on the master device itself according to the fifth remote control instruction.

In a third possible implementation manner of the first aspect, the activating, by a master device, a main menu in the master device according to the main menu request instruction includes: acquiring, by the master device, the main menu according to the main menu request instruction and a prestored mapping relationship between an instruction and a main menu storage address, and displaying the main menu by using a display screen of the master device; and the activating, by the master device according to the first remote control instruction, the peripheral submenu corresponding to the submenu activation option includes: acquiring, by the master device according to the first remote control instruction and a prestored mapping relationship between an instruction and a submenu storage address, the peripheral submenu corresponding to the submenu activation option, and displaying, by using the display screen, the peripheral submenu corresponding to the corresponding to the submenu activation option. With reference to the first aspect or the first possible implementation manner of the first aspect or the second possible implementation manner of the first aspect or the third possible implementation manner of the first aspect, in a fourth possible implementation manner of the first aspect, before the receiving, by the master device, a first remote control instruction that is sent by the remote control device and used to select the submenu activation option, the method includes: sending, by the master device, an activation instruction to the peripheral device corresponding to the submenu activation option, so that the peripheral device corresponding to the submenu activation option enters a working state.

With reference to the first aspect or the first possible implementation manner of the first aspect or the second possible implementation manner of the first aspect or the third possible implementation manner of the first aspect, in a sixth possible implementation manner of the first aspect, before the receiving, by the master device, a first remote control instruction that is sent by the remote control device and used to select the submenu activation option, the method includes: receiving, by the master device, control function description information that is sent by the peripheral device corresponding to the submenu activation option and of the peripheral device corresponding to the submenu activation option; and generating, by the master device according to the control function description information of the peripheral device corresponding to the submenu activation option, the peripheral submenu corresponding to the submenu activation option, and adding the submenu activation option to the main menu,

With reference to the first aspect or the first possible implementation manner of the first aspect or the second possible implementation manner of the first aspect or the third possible implementation manner of the first aspect, in a seventh possible implementation manner of the first aspect, before the receiving, by the master device, a first remote control instruction that is sent by the remote control device and used to select the submenu activation option, the method includes: receiving, by the master device, a registration request that is sent by the peripheral device corresponding to the submenu activation option, where the registration request includes the peripheral submenu corresponding to the submenu activation option; and adding, by the master device, the submenu activation option to the main menu.

With reference to the third possible implementation manner of the first aspect, in an eighth possible implementation manner of the first aspect, the displaying, by the master device, the main menu by using a display screen of the master device includes: displaying, by the master device in a horizontal and/or vertical display manner, the at least one submenu activation option in the main menu; and the displaying, by the master device by using the display screen, the peripheral submenu corresponding to the submenu activation option includes: displaying, by the master device in a horizontal and/or vertical display manner, the at least one control sub-option in the peripheral submenu corresponding to the submenu activation option. According to a second aspect, a remote control method is provided, including: sending, by a remote control device, a main menu request instruction to a master device, so that the master device activates a main menu in the master device according to the main menu request instruction, where the main menu includes at least one submenu activation option, one submenu activation option corresponds to one peripheral device connected to the master device and is used to activate a peripheral submenu corresponding to the corresponding peripheral device, and the peripheral submenu includes at least one control sub-option that is used to perform function control on the peripheral device corresponding to the peripheral submenu; sending, by the remote control device to the master device, a first remote control instruction that is used to select the submenu activation option, so that the master device activates, according to the first remote control instruction, the peripheral submenu corresponding to the submenu activation option; and sending, by the remote control device to the master device, a second remote control instruction that is used to select the control sub-option in the activated peripheral submenu, so that the master device performs, according to the second remote control instruction, control on the peripheral device corresponding to the activated peripheral submenu. Therein, the performing, by the master device according to the second remote control instruction, control on the peripheral device corresponding to the activated peripheral submenu includes: sending, by the master device, the second remote control instruction to the peripheral device corresponding to the activated peripheral submenu, so as to control the peripheral device corresponding to the activated peripheral submenu to perform an action corresponding to the second remote control instruction; and receiving, by the master device, a remote control result that is returned by the peripheral device corresponding to the activated peripheral submenu, and displaying the remote control result by using the display screen of the master device.

In a first possible implementation manner of the second aspect, the main menu further includes at least one control option that is used to perform function control on the master device; and the remote control method further includes: sending, by the remote control device to the master device, a third remote control instruction that is used to select the control option, so that the master device performs control on the master device itself according to the third remote control instruction.

In a second possible implementation manner of the second aspect, the main menu further includes a main activation option that is used to activate a master submenu corresponding to the master device, and the master submenu includes at least one control sub-option that is used to perform function control on the master device; and the remote control method further includes: sending, by the remote control device to the master device, a fourth remote control instruction that is used to select the main activation option, so that the master device activates the master submenu according to the fourth remote control instruction; and sending, by the remote control device to the master device, a fifth remote control instruction that is used to select the control sub-option in the master submenu, so that the master device performs control on the master device itself according to the fifth remote control instruction.

According to a third aspect, a master device is provided, including: a first receiving module, configured to receive a main menu request instruction sent by a remote control device; a first activating module, configured to activate a main menu in the master device according to the main menu request instruction received by the first receiving module, where the main menu includes at least one submenu activation option, one submenu activation option corresponds to one peripheral device connected to the master device and is used to activate a peripheral submenu corresponding to the corresponding peripheral device, and the peripheral submenu includes at least one control sub-option that is used to perform function control on the peripheral device corresponding to the peripheral submenu; a second receiving module, configured to receive, after the first activating module activates the main menu, a first remote control instruction that is sent by the remote control device and used to select the submenu activation option; a second activating module, configured to activate, according to the first remote control instruction received by the second receiving module, the peripheral submenu corresponding to the submenu activation option; a third receiving module, configured to receive, after the second activating module activates the peripheral submenu corresponding to the submenu activation option, a second remote control instruction that is sent by the remote control device and used to select the control sub-option in the activated peripheral submenu; and a first control module, configured to perform, according to the second remote control instruction received by the third receiving module, control on the peripheral device corresponding to the activated peripheral submenu. Therein, the first control module includes: a sending unit, configured to send the second remote control instruction to the peripheral device corresponding to the activated peripheral submenu, so as to control the peripheral device corresponding to the activated peripheral submenu to perform an action corresponding to the second remote control instruction; and a receiving unit, configured to receive, after the sending unit sends the second remote control instruction to the peripheral device corresponding to the activated peripheral submenu, a remote control result that is returned by the peripheral device corresponding to the activated peripheral submenu, and display the remote control result by using the display screen of the master device.

In a first possible implementation manner of the third aspect, the main menu further includes at least one control option that is used to perform function control on the master device; and the master device further includes: a fourth receiving module, configured to receive a third remote control instruction that is sent by the remote control device and used to select the control option; and a second control module, configured to perform control on the master device according to the third remote control instruction received by the fourth receiving module.

In a second possible implementation manner of the third aspect, the main menu further includes a main activation option that is used to activate a master submenu corresponding to the master device, and the master submenu includes at least one control sub-option that is used to perform function control on the master device; and the master device further includes: a fifth receiving module, configured to receive a fourth remote control instruction that is sent by the remote control device and used to select the main activation option; a third activating module, configured to activate the master submenu according to the fourth remote control instruction received by the fifth receiving module; a sixth receiving module, configured to receive, after the third activating module activates the master submenu, a fifth remote control instruction that is sent by the remote control device and used to select the control sub-option in the master submenu; and a third control module, configured to perform control on the master device according to the fifth remote control instruction received by the sixth receiving module. In a third possible implementation manner of the third aspect, the first activating module is specifically configured to acquire the main menu according to the main menu request instruction and a prestored mapping relationship between an instruction and a main menu storage address, and display the main menu by using a display screen of the master device; and the second activating module is specifically configured to acquire, according to the first remote control instruction and a prestored mapping relationship between an instruction and a submenu storage address, the peripheral submenu corresponding to the submenu activation option, and display, by using the display screen, the peripheral submenu corresponding to the submenu activation option.

With reference to the third aspect or the first possible implementation manner of the third aspect or the second possible implementation manner of the third aspect or the third possible implementation manner of the third aspect, in a fourth possible implementation manner of the third aspect, the master device further includes: a sending module, configured to send, before the second receiving module receives the first remote control instruction, an activation instruction to the peripheral device corresponding to the submenu activation option, so that the peripheral device corresponding to the submenu activation option enters a working state.

With reference to the third aspect or the first possible implementation manner of the third aspect or the second possible implementation manner of the third aspect or the third possible implementation manner of the third aspect, in a sixth possible implementation manner of the third aspect, the master device further includes: a seventh receiving module, configured to receive, before the second receiving module receives the first remote control instruction, control function description information that is sent by the peripheral device corresponding to the submenu activation option and of the peripheral device corresponding to the submenu activation option; and a generating and adding module, configured to generate, according to the control function description information that is received by the seventh receiving module and of the peripheral device corresponding to the submenu activation option, the peripheral submenu corresponding to the submenu activation option, and add the submenu activation option to the main menu.

With reference to the third aspect or the first possible implementation manner of the third aspect or the second possible implementation manner of the third aspect or the third possible implementation manner of the third aspect, in a seventh possible implementation manner of the third aspect, the master device further includes: an eighth receiving module, configured to receive, before the second receiving module receives the first remote control instruction, a registration request that is sent by the peripheral device corresponding to the submenu activation option, where the registration request includes the peripheral submenu corresponding to the submenu activation option; and an adding module, configured to add the submenu activation option to the main menu.

With reference to the third possible implementation manner of the third aspect, in an eighth possible implementation manner of the third aspect, that the first activating module is configured to display the main menu by using a display screen of the master device includes that: the first activating module is specifically configured to display, in a horizontal or vertical display manner, at least one peripheral submenu in the main menu; and that the second activating module is configured to display, by using the display screen, the peripheral submenu corresponding to the submenu activation option includes that: the second activating module is specifically configured to display, in a horizontal or vertical display manner, the at least one control sub-option in the peripheral submenu corresponding to the submenu activation option. According to a fifth aspect, a remote control device is provided, including: a first sending module, configured to send a main menu request instruction to a master device, so that the master device activates a main menu in the master device according to the main menu request instruction, where the main menu includes at least one submenu activation option, one submenu activation option corresponds to one peripheral device connected to the master device and is used to activate a peripheral submenu corresponding to the corresponding peripheral device, and the peripheral submenu includes at least one control sub-option that is used to perform function control on the peripheral device corresponding to the peripheral submenu; a second sending module, configured to, after the first sending module sends the main menu request instruction, send, to the master device, a first remote control instruction that is used to select the submenu activation option, so that the master device activates, according to the first remote control instruction, the peripheral submenu corresponding to the submenu activation option; and a third sending module, configured to, after the second sending module sends the first remote control instruction, send, to the master device, a second remote control instruction that is used to select the control sub-option in the activated peripheral submenu, so that the master device performs, according to the second remote control instruction, control on the peripheral device corresponding to the activated peripheral submenu. Therein, the performing, by the master device according to the second remote control instruction, control on the peripheral device corresponding to the activated peripheral submenu includes: sending, by the master device, the second remote control instruction to the peripheral device corresponding to the activated peripheral submenu, so as to control the peripheral device corresponding to the activated peripheral submenu to perform an action corresponding to the second remote control instruction; and receiving, by the master device, a remote control result that is returned by the peripheral device corresponding to the activated peripheral submenu, and displaying the remote control result by using the display screen of the master device.

In a first possible implementation manner of the fifth aspect, the main menu further includes at least one control option that is used to perform function control on the master device; and the remote control device further include: a fourth sending module, configured to send, to the master device, a third remote control instruction that is used to select the control option, so that the master device performs control on the master device itself according to the third remote control instruction.

In a second possible implementation manner of the fifth aspect, the main menu further includes a main activation option that is used to activate a master submenu corresponding to the master device, and the master submenu includes at least one control sub-option that is used to perform function control on the master device; and the remote control device further includes: a sixth sending module, configured to, after the fifth sending module sends the fourth remote control instruction, send, to the master device, a fifth remote control instruction that is used to select the control sub-option in the master submenu, so that the master device performs control on the master device itself according to the fifth remote control instruction. According to the provided technical solutions, the included submenu activation option used to activate the peripheral submenu corresponding to the peripheral device is formed in the master device, and when performing remote control on the peripheral device, the remote control device first enables, by using the main menu request instruction, the master device to activate the main menu; then the remote control device activates the peripheral submenu corresponding to the master device by sending a remote control instruction for selecting a submenu activation option that can activate a peripheral submenu; and then the remote control device sends the remote control instruction for selecting a control sub-option in the activated peripheral submenu, so that the master device may control the corresponding peripheral device according to the remote control instruction. Based on this, remote control may be performed on multiple peripheral devices by using a remote control device. In this way, when using a different device, a user does not need to use a different remote control device, but only needs to perform the foregoing simple remote control procedure again, and therefore, operation convenience and remote control efficiency are improved.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a remote control method according to an embodiment of the present invention;
FIG. 2 is a schematic diagram of a television main menu displayed in a horizontal manner according to an embodiment of the present invention;
FIG. 3 is a schematic diagram of a television main menu displayed in a vertical manner according to an embodiment of the present invention;
FIG. 4 is a schematic diagram of a first peripheral submenu displayed in a horizontal manner according to an embodiment of the present invention;
FIG. 5 is a schematic diagram of a first peripheral submenu displayed in a horizontal and vertical manner according to an embodiment of the present invention;
FIG. 6 is a flowchart of a remote control method according to another embodiment of the present invention;
FIG. 7 is a flowchart of a remote control method according to still another embodiment of the present invention;
FIG. 8 is a flowchart of a remote control method according to yet another embodiment of the present invention;
FIG. 9 is a schematic structural diagram of a master device according to an embodiment of the present invention;
FIG. 10 is a schematic structural diagram of a master device according to another embodiment of the present invention;
FIG. 11 is a schematic structural diagram of a master device according to still another embodiment of the present invention;
FIG. 12 is a schematic structural diagram of a remote control device according to an embodiment of the present invention; and
FIG. 13 is a schematic structural diagram of a remote control device according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

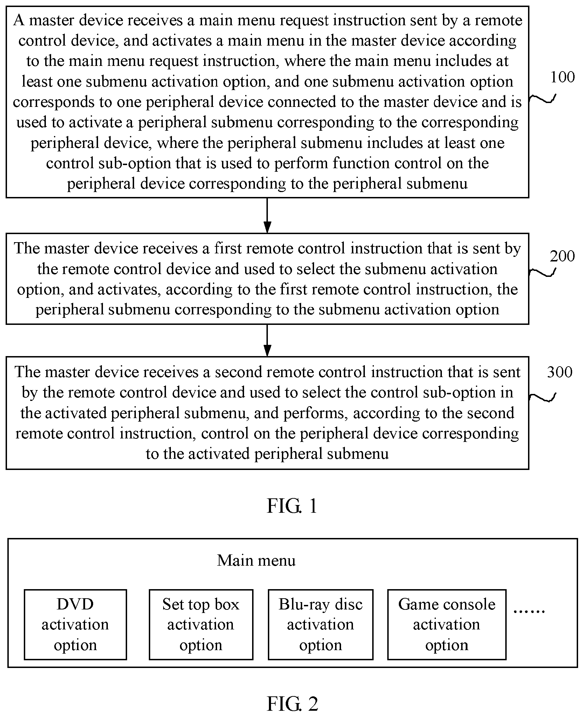

FIG. 1 is a flowchart of a remote control method according to an embodiment of the present invention. As shown in FIG. 1, the method in this embodiment includes:
Step 100: A master device receives a main menu request instruction sent by a remote control device, and activates a main menu in the master device according to the main menu request instruction, where the main menu includes at least one submenu activation option, one submenu activation option corresponds to one peripheral device connected to the master device and is used to activate a peripheral submenu corresponding to the corresponding peripheral device, and the peripheral submenu includes at least one control sub-option that is used to perform function control on the peripheral device corresponding to the peripheral submenu.
Step 200: The master device receives a first remote control instruction that is sent by the remote control device and used to select the submenu activation option, and activates, according to the first remote control instruction, the peripheral submenu corresponding to the submenu activation option.
Step 300: The master device receives a second remote control instruction that is sent by the remote control device and used to select the control sub-option in the activated peripheral submenu, and performs, according to the second remote control instruction, control on the peripheral device corresponding to the activated peripheral submenu. In this embodiment, the master device has at least one peripheral device, where the peripheral device is configured to cooperate with the master device to implement a corresponding function, and the peripheral device is generally connected to the master device in a wired or wireless manner. For example, the master device may be, but is not limited to, a television, and the peripheral device may be a DVD player, a set top box, a Blu-ray disc player, or the like; in addition, the television generally has a high definition multimedia interface (High Definition Multimedia Interface, HDMI for short) interface, and each peripheral device may be connected to the television through the HDMI interface. It is noted herein that the peripheral device of the master device is not limited to a physical entity independent from the master device, and may also be an application program in the master device. For example, when the television is used as the master device, the peripheral device of the television may also be a cable television function, where the cable television function is an application program in an implementation form, and in this case, the peripheral device does not need to connect to the television through the HDMI interface.

In this embodiment, the master device has the main menu, and also has the peripheral submenu that is used to remotely control each peripheral device, and the submenu activation option corresponding to each peripheral submenu is set in the main menu to activate the corresponding peripheral submenu. In this manner, menu cascading is implemented between the master device and each peripheral device corresponding to the master device. Based on this, the master device in this embodiment may perform remote control on any peripheral device by working with the remote control device. When the master device is in a working state, when a user needs to remotely control a peripheral device, the main menu request instruction is first sent by using the remote control device to activate the main menu in the master device. For example, the user may press a key that is on the remote control device and used to send the main menu request instruction, thereby enabling the remote control device to send the main menu request instruction. Optionally, the key that is on the remote control device and sends the main menu request instruction may be a hardware key or may also be a function key implemented by software. After the remote control device sends the main menu request instruction, the master device receives the main menu request instruction sent by the remote control device, and then activates the main menu according to the received main menu request instruction. The "activate" herein mainly refers to a function of activating the main menu, so that the remote control instruction that is sent by the remote control device and used to select each submenu activation option in the main menu may be received. The master device may activate the main menu in multiple manners, as long as a manner can achieve an activation purpose.

In an optional implementation manner, a manner of the activating, by the master device, the main menu according to the main menu request instruction includes: acquiring, by the master device, the main menu according to the main menu request instruction and a prestored mapping relationship between an instruction and a main menu storage address, and displaying the main menu by using a display screen of the master device. Specifically, the mapping relationship between an instruction and a main menu storage address is prestored in the master device, and after receiving the main menu request instruction, the master device acquires a storage address of the main menu according to the main menu request instruction, and then acquires the main menu from storage space corresponding to the storage address and displays the main menu to the user. This not only activates the main menu, but also displays each submenu activation option in the main menu to the user, helping the user select a corresponding submenu activation option by using the remote control device to activate a corresponding peripheral submenu.

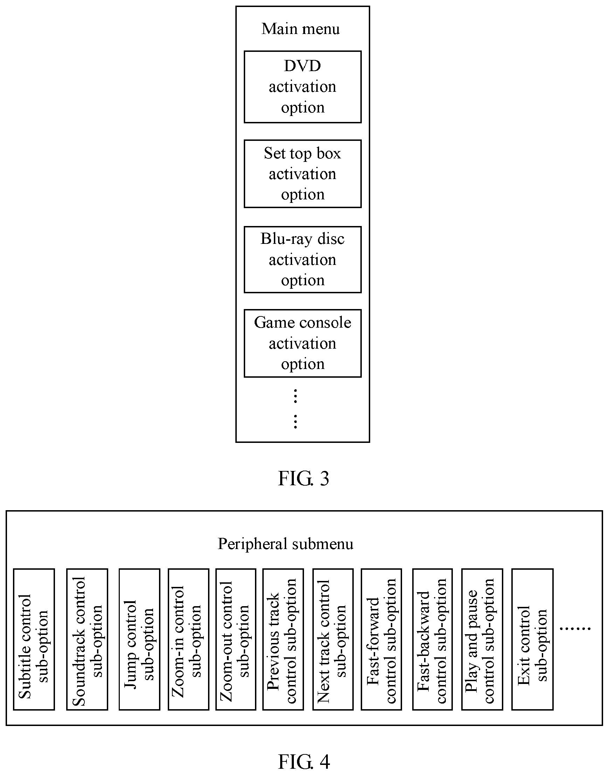

Optionally, when the main menu is displayed to the user, for ease of understanding, by the user, on which peripheral submenu corresponding to a peripheral device is specifically activated by using each submenu activation option in the main menu, characteristic information of the peripheral device corresponding to the submenu activation option may be used to name the submenu activation option. For example, a submenu activation option that is used to activate a DVD submenu may be named a DVD activation option, a submenu activation option that is used to activate a set top box submenu may be named a set top box activation option, and a submenu activation option that is used to activate a Blu-ray disc player submenu may be named a Blu-ray disc activation option. The characteristic information of the peripheral device corresponding to the submenu activation option is used to name the submenu activation option, and in addition to that, each submenu activation option may also be named according to a sequence. For example, a sequence of peripheral devices may be specified in advance, and then according to the sequence, each corresponding submenu action option is sequentially named a first submenu activation option, a second submenu activation option,..., and an nth submenu activation option. Optionally, when the main menu is displayed to the user, the master device may display, in a horizontal and/or vertical display manner, the at least one submenu activation option in the main menu. As shown in FIG. 2, when the master device is a television, a main menu of the television is displayed in a horizontal manner. As shown in FIG. 3, when the master device is a television, a main menu of the television is displayed in a vertical manner. As shown in FIG. 2 and FIG. 3, the main menu of the television includes, but is not limited to: the DVD activation option, the set top box activation option, the Blu-ray disc activation option, a game console activation option, and the like.

In addition, in a process of activating the main menu, the master device may display the main menu to the user, or may not display the main menu to the user but displays only the function of activating the menu, so that a sequence of submenu activation options in the main menu and a correspondence between a submenu activation option and a peripheral submenu corresponding to a peripheral device may be specified in advance. For example, this correspondence may be provided for the user by using a user manual, so that the user may send a corresponding remote control instruction according to this correspondence by using the remote control device.

After the master device activates the main menu, the user may send, by using the remote control device, a remote control instruction for selecting a submenu activation option, thereby enabling the master device to activate a corresponding peripheral submenu. Operations in which the remote control device sends remote control instructions of selecting each submenu activation option and operations in which the master device activates corresponding peripheral submenus according to the remote control instructions are the same, and the only difference lies in that the remote control instructions may be different. The "activate" herein mainly refers to a function of activating the peripheral submenu corresponding to the submenu activation option, so that a remote control instruction that is sent by the remote control device and of selecting each control sub-option in the peripheral submenu may be received. The master device may activate the peripheral submenu corresponding to the submenu activation option in multiple manners, and any manner that can achieve an activation purpose is acceptable.

In an optional implementation manner, a manner of the activating, by the master device according to the first remote control instruction, the peripheral submenu corresponding to the submenu activation option selected by using the first remote control instruction includes: acquiring, by the master device according to the first remote control instruction and a prestored mapping relationship between an instruction and a submenu storage address, the peripheral submenu corresponding to the submenu activation option selected by using the first remote control instruction, and displaying, by using the display screen of the master device, the peripheral submenu corresponding to the submenu activation option selected by using the first remote control instruction. Specifically, the mapping relationship between an instruction and a submenu storage address is prestored in the master device, where the mapping relationship includes a mapping relationship between a storage address of each peripheral submenu and a remote control instruction that needs to be sent to select and activate a submenu activation option of each peripheral submenu. In this way, after the master device receives the first remote control instruction, the storage address of the peripheral submenu corresponding to the submenu activation option selected by using the first remote control instruction may be found from the mapping relationship, thereby further acquiring the peripheral submenu corresponding to the submenu activation option and then displaying the peripheral submenu corresponding to the submenu activation option to the user by using the display screen. This not only activates the peripheral submenu corresponding to the submenu activation option, but also displays the peripheral submenu to the user, helping the user select the corresponding control sub-option by using the remote control device to send a remote control instruction for performing control on the corresponding peripheral device. Optionally, when the peripheral submenu corresponding to the submenu activation option selected by using the first remote control instruction is displayed to the user, for ease of understanding, by a user, on a specific control function of each control sub-option in the peripheral submenu corresponding to the submenu activation option, function control on the peripheral device corresponding to the peripheral submenu may be used to name each control sub-option. For example, that the peripheral device is the DVD player is used as an example, then a function sub-option of performing fast-forward control on the DVD player may be named a fast-forward sub-option, a control sub-option of performing volume control on the DVD player may be named a volume adjusting sub-option, a control sub-option of performing subtitle control on the DVD player may be named a subtitle control sub-option, and the like. In addition, when the control function is used to name each control sub-option, a text form is used for naming, and besides, an identifier that is commonly used in the prior art and corresponds to a control function may also be used to indicate each control sub-option. For example, a control sub-option indicating fast-forward may be identified by using a symbol ">>" or "►►", and correspondingly, a control sub-option indicating fast-backward may be identified by using a symbol "<<" or "◄◄"; and a control sub-option indicating volume up may be identified by using a symbol "+", and correspondingly, a control sub-option indicating volume down may be identified by using a symbol "-", and the like.

The control function is used to name each control sub-option, and in addition to that, each control sub-option may also be named according to a sequence. For example, a sequence of performing function control on the peripheral device may be specified in advance, and then according to the sequence, corresponding control sub-options are sequentially named a first control sub-option, a second control sub-option,..., and an nth control sub-option.

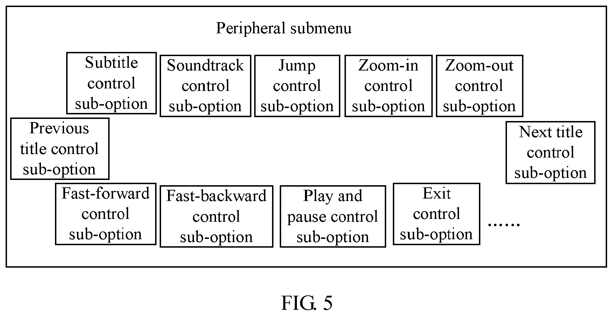

Optionally, when the peripheral submenu corresponding to the submenu activation option selected by using the first remote control instruction is displayed to the user, the master device may display, in a horizontal and/or vertical display manner, at least one control sub-option in the peripheral submenu corresponding to the submenu activation option selected by using the first remote control instruction. FIG. 4 shows that when the DVD player is the peripheral device corresponding to the peripheral submenu selected by using the first remote control instruction, the peripheral submenu is displayed in a horizontal manner. FIG. 5 shows that when the DVD player is the peripheral device corresponding to the peripheral submenu selected by using the first remote control instruction, the peripheral submenu is displayed in a horizontal and vertical manner. As shown in FIG. 4 and FIG. 5, when the peripheral device corresponding to the peripheral submenu selected by using the first remote control instruction is the DVD player, the peripheral submenu includes and is not limited to the following control sub-options: a subtitle control sub-option, a soundtrack control sub-option, a jump control sub-option, a zoom-in control sub-option, a zoom-out control sub-option, a previous track control sub-option, a next track control sub-option, a fast-forward control sub-option, a fast-backward control sub-option, a play and pause control sub-option, and an exit control sub-option.

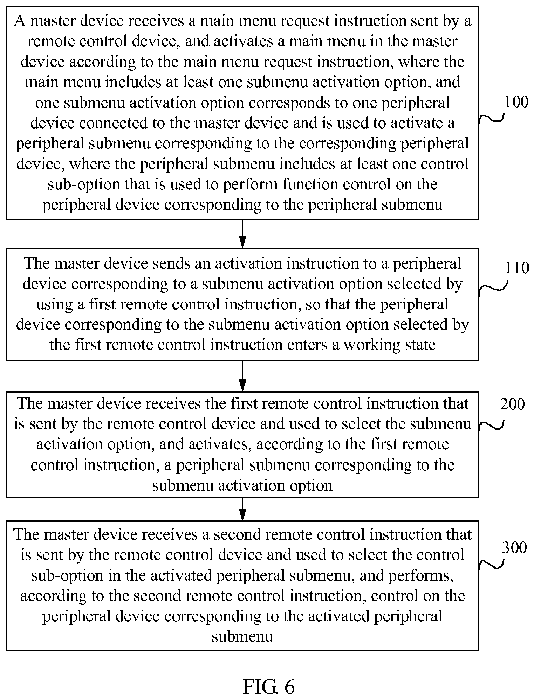

In an optional implementation manner, as shown in FIG. 6, before step 200, the remote control method includes:
Step 110: The master device sends an activation instruction to a peripheral device corresponding to a submenu activation option selected by using a first remote control instruction, so that the peripheral device corresponding to the submenu activation option selected by using the first remote control instruction enters a working state.

In this implementation manner, the peripheral device corresponding to the submenu activation option selected by using the first remote control instruction mainly refers to a physical entity that is independent from the master device and connected to the master device. The master device may activate the peripheral device corresponding to the submenu activation option before the user sends, by using the remote control device, the first remote control instruction for activating the peripheral submenu corresponding to the submenu activation option. After activating the peripheral device corresponding to the submenu activation option, the master device receives the first remote control instruction sent by the remote control device, activates the peripheral submenu corresponding to the submenu activation option, and further implements control on the peripheral device corresponding to the activated peripheral submenu. Herein, the peripheral device corresponding to the peripheral submenu activated by using the first remote control instruction is also the peripheral device corresponding to the submenu activation option that corresponds to the peripheral submenu. Optionally, if the master device is a television, the peripheral device corresponding to the activated peripheral submenu may be connected to the master device through an HDMI interface, and the master device may send the activation instruction to the peripheral device through the HDMI interface.

After the peripheral submenu corresponding to the submenu activation option is activated, the remote control device may send a remote control instruction for selecting a control sub-option in the peripheral submenu, so that the master device performs, according to the remote control instruction, control on the peripheral device corresponding to the peripheral submenu. Operations in which the remote control device sends remote control instructions of selecting each control sub-option in the peripheral submenu and operations in which the master device controls, according to the remote control instructions, peripheral devices corresponding to the peripheral submenu are the same, and the only difference lies in that the remote control instructions may be different.

It is noted herein that the master device sends the activation instruction to the peripheral device corresponding to the submenu activation option to enable the peripheral device to enter the working state, in addition to that, the peripheral submenu corresponding to the peripheral device in this embodiment may be used to enable a peripheral device that is already powered on but has not been enabled. That is, each peripheral submenu in this embodiment may also be used to enable the peripheral device that is already powered on but has not been enabled.

In an optional implementation manner, a manner of the performing, by the master device according to the second remote control instruction, control on the peripheral device corresponding to the activated peripheral submenu includes: sending, by the master device, the second remote control instruction to the peripheral device corresponding to the activated peripheral submenu, so as to control the peripheral device corresponding to the activated peripheral submenu to perform an action corresponding to the second remote control instruction; and receiving, by the master device, a remote control result that is returned by the peripheral device corresponding to the activated peripheral submenu, and displaying the remote control result by using the display screen of the master device. According to a different second remote control instruction, an action of the peripheral device corresponding to the activated peripheral submenu may be different. Optionally, the master device may send the second remote control instruction to the peripheral device in a wired manner, so as to control the peripheral device to perform the action corresponding to the second remote control instruction. For example, the master device may send the second remote control instruction to the peripheral device by using a video cable or an electrical power cable, so as to control the peripheral device to perform the action corresponding to the second remote control instruction. In addition, the master device may send the second remote control instruction to the peripheral device in a wireless manner, so as to control the peripheral device to perform the action corresponding to the second remote control instruction. For example, the master device may send the second remote control instruction to the peripheral device in a wireless manner, such as Wireless Fidelity (Wireless-Fidelity, WiFi for short), Zigbee or infrared, to control the peripheral device to perform the action corresponding to the second remote control instruction.

It is noted herein that the remote control device generally performs communication with the master device in a wireless manner, and therefore, each remote control instruction or another instruction (such as the main menu request instruction) sent by the remote control device to the master device is actually electromagnetic waves of various frequency bands. Based on this, a manner of differentiating different instructions sent by the remote control device may be performed by using frequencies, amplitudes, phases, and the like of the electromagnetic waves, to which it is not limited. For example, the remote control device may also differentiate different instructions by adding different identification information to the different instructions. In this embodiment, the master device has the main menu, and also has the peripheral submenu that is used to remotely control each peripheral device, and the submenu activation option corresponding to each peripheral submenu is set in the main menu to activate the corresponding peripheral submenu. In this manner, menu cascading is implemented between the master device and each peripheral device corresponding to the master device. Based on this, by using a corresponding remote control device and receiving the remote control instruction sent by the remote control device, the master device in this embodiment may implement remote control on any peripheral device. In this way, when the user uses a different device, only one remote control device is required in a whole control process, with no need to use a different remote control device as in the prior art, thereby avoiding a problem of a matching error, improving convenience of performing remote control on a device in use, and improving efficiency of performing remote control on the device in use.

In an optional implementation manner, the main menu not only includes the submenu activation option that is used to activate each peripheral submenu, but also includes information required for performing function control on the master device itself. For example, the information may be at least one control option required for performing function control on the master device, and may also be a main activation option that is used to activate a master submenu corresponding to the master device. Based on the information that is included in the main menu and used to perform function control on the master device, the user may flexibly and conveniently perform remote control on the master device by using the remote control device. The remote control method in this embodiment further includes an operation of receiving, by the master device, a remote control instruction sent by the remote control device and performing control on the master device itself according to the remote control instruction. It is noted herein that execution sequences of the operation of receiving, by the master device, a remote control instruction sent by the remote control device, and performing control on the master device itself according to the remote control instruction and the operation of receiving, by the master device, a remote control instruction sent by the remote control device, and performing control on the peripheral device according to the remote control instruction are not limited, and are determined according to a remote control requirement of the user.

When the main menu includes that at least one submenu activation option and the at least one control option that is used to perform function control on the master device, the operation of receiving, by the master device, a remote control instruction sent by the remote control device and performing control on the master device itself according to the remote control instruction includes: receiving, by the master device, a third remote control instruction that is sent by the remote control device and used to select the control option in the main menu, and performing control on the master device itself according to the third remote control instruction. The third remote control instruction herein may be a remote control instruction for selecting any control option in the main menu. Specifically, when the user needs to perform remote control on the master device, the user may send a corresponding remote control instruction by using the remote control device. Each control option in the main menu corresponds to one control function of the master device. The remote control device may send the third remote control instruction for selecting the control option in the main menu, and the master device receives the third remote control instruction and then performs corresponding control on the master device itself according to the third remote control instruction. For example, if a third control instruction is to turn up volume of the master device, the master device may turn up the volume of the master device; and if the third control instruction is to increase display luminance of the master device, the master device may increase the display luminance of the master device.

When the main menu includes the at least one submenu activation option and the main activation option that is used to activate the master submenu corresponding to the master device, the master submenu includes at least one control sub-option that is used to perform function control on the master device, and the operation of receiving, by the master device, a remote control instruction sent by the remote control device and performing control on the master device itself according to the remote control instruction includes: receiving, by the master device, a fourth remote control instruction that is sent by the remote control device and used to select the main activation option, and activating the master submenu according to the fourth remote control instruction; and after the master submenu is activated, receiving, by the master device, a fifth remote control instruction that is sent by the remote control device and used to select the control sub-option in the master submenu, and performing control on the master device itself according to the fifth remote control instruction.

The control sub-option in the master submenu may be implemented in the foregoing various implementation manners of the control sub-option in the peripheral submenu, and details are not repeatedly described herein. In addition, the activating, by the master device, the master submenu according to the fourth remote control instruction may be implemented in a manner that is similar to the manner in which the master device activates, according to the first remote control instruction, the peripheral submenu corresponding to the submenu activation option, and details are not repeatedly described herein.

As can be seen from the foregoing description, according to the remote control method provided in this embodiment, the main menu further includes the information required for performing function control on the master device, so that a same remote control device may perform remote control on different peripheral devices, and may also perform remote control on the master device. In this way, when using the master device again, the user does not need to change the remote control device, which avoids a problem of a matching error of the remote control device; and only a simple remote control operation needs to be performed, thereby improving convenience of performing remote control on corresponding devices when the user uses different devices and improving remote control efficiency.

In addition, the remote control method provided in this embodiment supports implementation of remote control on the master device and the peripheral device by using a same remote control device, and the remote control operation is relatively simple, so that the remote control device is relatively simple in implementation, which simplifies a design of the remote control device, improves an operation capability of a single remote control device and further enhances operation experience of the user. In addition, because the design of the remote control device may be simplified, the remote control device may be more beautiful in implementation.

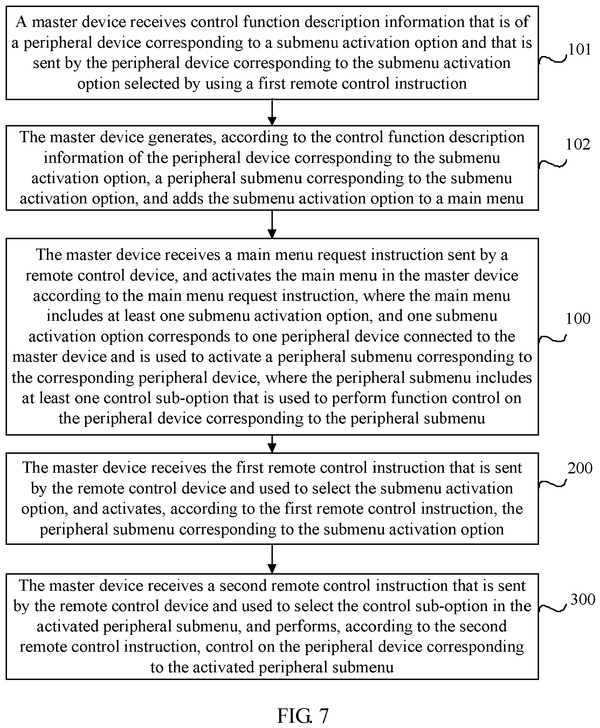

In an optional implementation manner, as shown in FIG. 7, before step 200, the remote control method includes:
Step 101: The master device receives control function description information that is of the peripheral device corresponding to the submenu activation option and that is sent by the peripheral device corresponding to the submenu activation option selected by using the first remote control instruction.
Step 102: The master device generates, according to the control function description information of the peripheral device corresponding to the submenu activation option, the peripheral submenu corresponding to the submenu activation option, and adds the submenu activation option to the main menu, where the peripheral submenu corresponding to the submenu activation option is also the peripheral submenu used for performing control on the peripheral device corresponding to the submenu activation option, that is, the peripheral submenu corresponding to the peripheral device.

The control function description information of the peripheral device mainly refers to information that describes the control function of the peripheral device, and the master device may determine, according to the information, the function control supported by the peripheral device.

The foregoing step 101 and step 102 mainly describe a process that before the peripheral submenu corresponding to the peripheral device is used, the master device learns the control function description information of the peripheral device, generates the peripheral submenu corresponding to the peripheral device, and performs association between the peripheral submenu and the main menu by using the submenu activation option, which lays a foundation for subsequent use of the peripheral submenu corresponding to the peripheral device.

Optionally, it is acceptable as long as the foregoing step 101 and step 102 are performed before step 200. However, preferably, when connecting to the master device for the first time, the peripheral device may send the control function description information of the peripheral device to the master device, thereby enabling the master device to learn the control function description information of the peripheral device and generate the peripheral submenu corresponding to the peripheral device, so as to perform control on the peripheral device. Therefore, the step 101 and step 102 are performed before step 100 in FIG. 7, to which it is not limited. Correspondingly, the master device performs the learning, in addition to that, the remote control device in this embodiment may also need to match a learning function of the master device. However, the remote control device does not need to be modified a lot. For example, multiple unused remote control instructions may be preset, and when a new peripheral submenu is added, it is acceptable as long as an unused remote control instruction corresponds to the new peripheral submenu.

It is noted herein that the master device not only generates, by using the learning function, the peripheral submenu corresponding to the peripheral device, but also may receive a registration request sent by the peripheral device, where the registration request includes the peripheral submenu corresponding to the submenu activation option that corresponds to the peripheral device (that is, the peripheral submenu corresponding to the peripheral device). The master device acquires the peripheral submenu corresponding to the submenu activation option from the registration request and stores the peripheral submenu, and then adds, to the main menu, the submenu activation option that is used to activate the peripheral submenu, thereby associating the peripheral submenu with the main menu.

It is noted herein that the submenu activation option that is on the main menu and corresponds to each peripheral submenu may be considered as an entry that is provided by the main menu for accessing each peripheral submenu, and whenever required, a corresponding peripheral submenu may be activated by using the entry. As can be seen from the foregoing description, in the remote control method according to this embodiment, the master device has the learning function and may generate the new peripheral submenu according to the control function description information sent by the peripheral device, so as to implement operation control on the newly connected peripheral device, and the remote control method has relatively strong adaptability and flexibility.

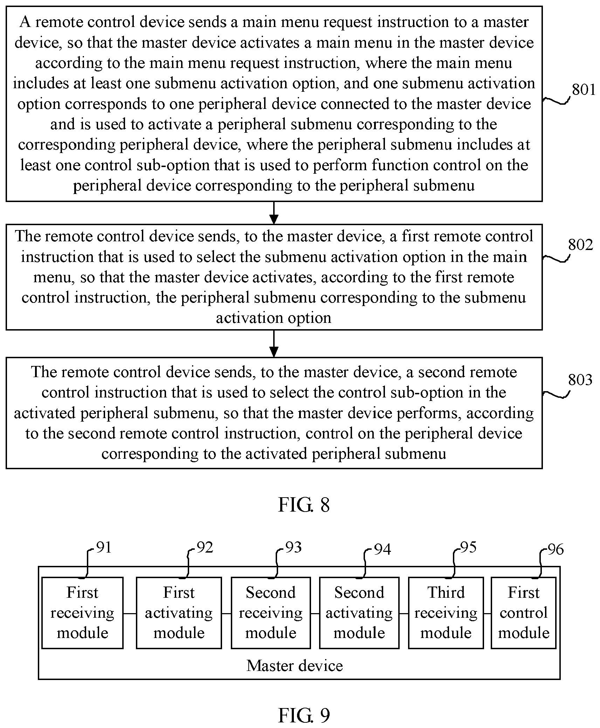

FIG. 8 is a flowchart of a remote control method according to yet another embodiment of the present invention. As shown in FIG. 8, the method in this embodiment includes: Step 801: A remote control device sends a main menu request instruction to a master device, so that the master device activates a main menu in the master device according to the main menu request instruction, where the main menu includes at least one submenu activation option, and one submenu activation option corresponds to one peripheral device connected to the master device and is used to activate a peripheral submenu of the corresponding peripheral device, where the peripheral submenu includes at least one control sub-option that is used to perform function control on the peripheral device corresponding to the peripheral submenu.
Step 802: The remote control device sends, to the master device, a first remote control instruction that is used to select the submenu activation option in the main menu, so that the master device activates, according to the first remote control instruction, the peripheral submenu corresponding to the submenu activation option.
Step 803: The remote control device sends, to the master device, a second remote control instruction that is used to select the control sub-option in the activated peripheral submenu, so that the master device performs, according to the second remote control instruction, control on the peripheral device corresponding to the activated peripheral submenu.

In an optional implementation manner, the main menu further includes at least one control option that is used to perform function control on the master device. The remote control method in this embodiment further includes: sending, by the remote control device to the master device, a third remote control instruction that is used to select the control option in the main menu, so that the master device performs control on the master device itself according to the third remote control instruction.

In an optional implementation manner, the main menu further includes a main activation option that is used to activate a master submenu corresponding to the master device, and the master submenu includes at least one control sub-option that is used to perform function control on the master device. The remote control method in this embodiment further includes: sending, by the remote control device to the master device, a fourth remote control instruction that is used to select the main activation option, so that the master device activates the master submenu according to the fourth remote control instruction; and sending, by the remote control device to the master device, a fifth remote control instruction that is used to select the control sub-option in the master submenu, so that the master device performs control on the master device itself according to the fifth remote control instruction.

The remote control method provided in this embodiment is described from a perspective of the remote control device. For a specific process, refer to the foregoing embodiment, and details are not repeatedly described herein.

According to the remote control method provided in this embodiment, the master device has the main menu, and also has the peripheral submenu that is used to remotely control each peripheral device, and the submenu activation option corresponding to each peripheral submenu is set in the main menu to activate the corresponding peripheral submenu. In this manner, menu cascading is implemented between the master device and each peripheral device corresponding to the master device. When performing remote control on the peripheral device, the remote control device first enables, by using the main menu request instruction, the master device to activate the main menu; then the remote control device activates the peripheral submenu corresponding to the master device by sending a remote control instruction for selecting a submenu activation option that can activate a peripheral submenu; and then the remote control device sends a remote control instruction for selecting a control sub-option in the activated peripheral submenu, so that the master device may control the corresponding peripheral device according to the remote control instruction, thereby achieving an objective of performing remote control on multiple peripheral devices by using one remote control device. In this way, when using a different device, a user does not need to use a different remote control device, but only needs to perform the foregoing simple remote control procedure again, and therefore, operation convenience and remote control efficiency are improved.

FIG. 9 is a schematic structural diagram of a master device according to an embodiment of the present invention. As shown in FIG. 9, the master device in this embodiment includes: a first receiving module 91, a first activating module 92, a second receiving module 93, a second activating module 94, a third receiving module 95, and a first control module 96.

The first receiving module 91 is configured to receive a main menu request instruction sent by a remote control device.

The first activating module 92 is connected to the first receiving module 91 and configured to activate a main menu in the master device in this embodiment according to the main menu request instruction received by the first receiving module 91, where the main menu includes at least one submenu activation option, and one submenu activation option corresponds to one peripheral device connected to the master device in this embodiment and is used to activate a peripheral submenu corresponding to the corresponding peripheral device, where the peripheral submenu includes at least one control sub-option that is used to perform function control on the peripheral device corresponding to the peripheral submenu.

The second receiving module 93 is connected to the first activating module 92 and configured to receive, after the first activating module 92 activates the main menu, a first remote control instruction that is sent by the remote control device and used to select the submenu activation option in the main menu.

The second activating module 94 is connected to the second receiving module 93 and configured to activate, according to the first remote control instruction received by the second receiving module 93, the peripheral submenu corresponding to the submenu activation option selected by using the first remote control instruction.

The third receiving module 95 is connected to the second activating module 94 and configured to receive, after the second activating module 94 activates the peripheral submenu corresponding to the submenu activation option selected by using the first remote control instruction, a second remote control instruction that is sent by the remote control device and used to select the control sub-option in the activated peripheral submenu.

The first control module 96 is connected to the third receiving module 95 and configured to perform, according to the second remote control instruction received by the third receiving module 95, control on the peripheral device corresponding to the activated peripheral submenu.

In an optional implementation manner, the first activating module 92 may be specifically configured to acquire the main menu according to the main menu request instruction and a prestored mapping relationship between an instruction and a main menu storage address, and display the main menu by using a display screen of the master device in this embodiment. The master device in this embodiment further includes the display screen, and the display screen is not drawn. Optionally, that the first activating module 92 is configured to display the main menu by using a display screen of the master device in this embodiment includes that: the first activating module 92 may be specifically configured to display, in a horizontal or vertical display manner, at least one peripheral submenu in the main menu.

The second activating module 94 may be specifically configured to acquire, according to the first remote control instruction and a prestored mapping relationship between an instruction and a submenu storage address, the peripheral submenu corresponding to the submenu activation option selected by using the first remote control instruction, and display, by using the display screen of the master device in this embodiment, the peripheral submenu corresponding to the submenu activation option selected by using the first remote control instruction. Optionally, that the second activating module 94 is configured to display, by using the display screen of the master device in this embodiment, the peripheral submenu corresponding to the submenu activation option selected by using the first remote control instruction includes that: the second activating module 94 may be specifically configured to display, in a horizontal or vertical display manner, at least one control sub-option in the peripheral submenu corresponding to the submenu activation option selected by using the first remote control instruction.

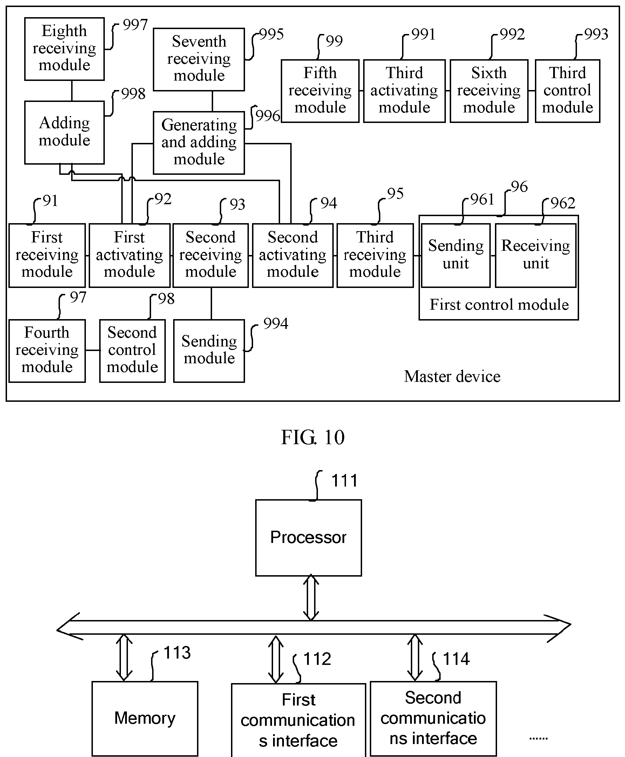

In an optional implementation manner, the main menu in the master device in this embodiment not only includes at least one submenu activation option, but also further includes at least one control option used for performing function control on the master device in this embodiment. Based on this, as shown in FIG. 10, the master device in this embodiment further includes: a fourth receiving module 97 and a second control module 98.

The fourth receiving module 97 is configured to receive a third remote control instruction that is sent by the remote control device and used to select the control option in the main menu.

The second control module 98 is connected to the fourth receiving module 97 and configured to perform control on the master device in this embodiment according to the third remote control instruction received by the fourth receiving module 97.

In an optional implementation manner, the main menu in the master device in this embodiment not only includes the at least one submenu activation option, but also includes a main activation option used to activate a master submenu corresponding to the master device in this embodiment, where the master submenu includes at least one control sub-option used for performing function control on the master device in this embodiment. Based on this, as shown in FIG. 10, the master device in this embodiment may further include: a fifth receiving module 99, a third activating module 991, a sixth receiving module 992, and a third control module 993.

The fifth receiving module 99 is configured to receive a fourth remote control instruction that is sent by the remote control device and used to select the main activation option.

The third activating module 991 is connected to the fifth receiving module 99 and configured to activate the master submenu according to the fourth remote control instruction received by the fifth receiving module 99.

The sixth receiving module 992 is connected to the third activating module 991 and configured to receive, after the third activating module 991 activates the master submenu, a fifth remote control instruction that is sent by the remote control device and used to select the control sub-option in the master submenu.

The third control module 993 is connected to the sixth receiving module 992 and configured to perform control on the master device in this embodiment according to the fifth remote control instruction received by the sixth receiving module 992.

In an optional implementation manner, as shown in FIG. 10, the master device in this embodiment further includes: a sending module 994. The sending module 994 is configured to send, before the second receiving module 93 receives the first remote control instruction, an activation instruction to the peripheral device corresponding to the submenu activation option selected by using the first remote control instruction, so that the peripheral device corresponding to the submenu activation option selected by using the first remote control instruction enters a working state. The sending module 994 is connected to the second receiving module 93 and configured to provide a condition for the second receiving module 93 to receive the first remote control instruction.

In an optional implementation manner, as shown in FIG. 10, an implementation manner of the first control module 96 includes: a sending unit 961, and a receiving unit 962.

The sending unit 961 is configured to send the second remote control instruction to the peripheral device corresponding to the activated peripheral submenu, so as to control the peripheral device corresponding to the activated peripheral submenu to perform an action corresponding to the second remote control instruction. The third receiving module 95 is connected to the sending unit 961 and configured to provide the second remote control instruction for the sending unit 961. The sending unit 961 may be specifically configured to send, in a video cable, an electrical power cable, a WiFi manner, a Zigbee manner, or an infrared manner, the second remote control instruction to the peripheral device corresponding to the activated peripheral submenu, so as to control the peripheral device corresponding to the activated peripheral submenu to perform the action corresponding to the second remote control instruction.

The receiving unit 962 is connected to the sending unit 961 and configured to receive, after the sending unit 961 sends the second remote control instruction to the peripheral device corresponding to the activated peripheral submenu, a remote control result that is returned by the peripheral device corresponding to the activated peripheral submenu, and display the remote control result by using the display screen of the master device in this embodiment.

In an optional implementation manner, as shown in FIG. 10, the master device in this embodiment further includes: a seventh receiving module 995, and a generating and adding module 996.

The seventh receiving module 995 is configured to receive, before the second receiving module 93 receives the first remote control instruction, control function description information that is of the peripheral device corresponding to the submenu activation option and that is sent by the peripheral device corresponding to the submenu activation option selected by using the first remote control instruction.

The generating and adding module 996 is connected to the seventh receiving module 995 and configured to generate, according to the control function description information that is received by the seventh receiving module 995 and of the peripheral device, the peripheral submenu corresponding to the submenu activation option selected by using the first remote control instruction, and add the submenu activation option selected by using the first remote control instruction to the main menu. Optionally, the generating and adding module 996 is further connected to the first activating module 92 and the second activating module 94 and configured to provide the main menu for the first activating module 92 and provide the second activating module 94 with the peripheral submenu corresponding to the submenu activation option selected by using the first remote control instruction.

In an optional implementation manner, as shown in FIG. 10, the master device in this embodiment further includes: an eighth receiving module 997, and an adding module 998.

The eighth receiving module 997 is configured to receive, before the second receiving module 93 receives the first remote control instruction, a registration request that is sent by the peripheral device corresponding to the submenu activation option selected by using the first remote control instruction, where the registration request includes the peripheral submenu corresponding to the submenu activation option selected by using the first remote control instruction.

The adding module 998 is connected to the eighth receiving module 997 and configured to add, after the eighth receiving module 997 receives the registration request, the submenu activation option selected by using the first remote control instruction to the main menu. The adding module 998 is further connected to the first activating module 92 and the second activating module 94 and configured to provide the main menu for the first activating module 92 and provide the second activating module 94 with the peripheral submenu corresponding to the submenu activation option selected by using the first remote control instruction.

The master device in this embodiment may be, but is not limited to, a television. Correspondingly, the peripheral device may be a DVD player, a set top box, a Blu-ray disc player, or the like.

Each function module of the master device provided in this embodiment may be configured to perform a procedure of the foregoing remote control method performed by the master device. Specific working principles thereof are not further described. For details, refer to the description of the method embodiment.

The master device provided in this embodiment has the main menu, and also has the peripheral submenu that is used to remotely control each peripheral device, and the submenu activation option corresponding to each peripheral submenu is set in the main menu to activate the corresponding peripheral submenu. In this manner, menu cascading is implemented between the master device and each peripheral device corresponding to the master device. Based on this, by using a corresponding remote control device and receiving the remote control instruction sent by the remote control device, the master device in this embodiment may implement remote control on any peripheral device. In this way, when the user uses a different device, only one remote control device is required in a whole control process, with no need to use a different remote control device as in the prior art, thereby avoiding a problem of a matching error, improving convenience of performing remote control on the device when the user uses the different device, and improving efficiency of performing remote control on the corresponding device.

FIG. 11 is a schematic structural diagram of a master device according to still another embodiment of the present invention. As shown in FIG. 11, the master device in this embodiment includes: a processor 111, at least two communications interfaces, a memory 113, a bus, and the like. The processor 111, the at least two communications interfaces, and the memory 113 are connected and communicate with each other by using the bus. The bus may be an industry standard architecture (Industry Standard Architecture, ISA for short) bus, a peripheral component interconnect (Peripheral Component Interconnect, PCI for short) bus, an extended industry standard architecture (Extended Industry Standard Architecture, EISA for short) bus, or the like. The bus may be classified into an address bus, a data bus, a control bus, and the like. For ease of denotation, the bus is indicated by using only one thick line in FIG. 11; however, it does not indicate that there is only one bus or only one type of bus.

The memory 113 is configured to store a program. Specifically, the program may include program code, where the program code includes a computer operation instruction. In addition, the memory 113 may also stores information, such as a main menu in the master device in this embodiment, and peripheral submenus. The main menu includes at least one submenu activation option, where one peripheral submenu corresponds to one peripheral device connected to the master device in this embodiment and is configured to activate a peripheral submenu corresponding to the corresponding peripheral device, and the peripheral submenu includes at least one control sub-option that is used to perform function control on the peripheral device corresponding to the peripheral submenu.

The memory 113 may include a high-speed RAM memory, and may also include a non-volatile memory (non-volatile memory), such as at least one disk memory.

The at least two communications interfaces are mainly responsible for implementing communication between the master device in this embodiment and another device, and in this embodiment, different communications interfaces may be responsible for communication between the master device and other different devices. For example, a first communications interface 112 in the at least two communications interfaces is responsible for communication between the master device in this embodiment and a remote control device. Specifically, the first communications interface 112 that is responsible for the communication between the master device and the remote control device is configured to receive a main menu request instruction sent by the remote control device, and is further configured to receive, after the processor 111 activates the main menu according to the main menu request instruction, a first remote control instruction that is sent by the remote control device and used to select the submenu activation option, and is configured to receive, after the processor 111 activates, according to the first remote control instruction, the peripheral submenu corresponding to the submenu activation option, a second remote control instruction that is sent by the remote control device and used to select the control sub-option in the activated peripheral submenu. In implementation, the first communications interface 112 may be an inductor, such as an infrared receiving diode. A second communications interface 114 in the at least two communications interfaces is responsible for communication between the master device in this embodiment and a peripheral device corresponding to the master device, where the second communications interface 114 may be an HDMI interface, a universal serial bus (Universal Serial Bus, USB for short) interface, a video graphics array (Video Graphics Array, VGA for short) interface, a network cable interface, or the like.

The processor 111 is configured to execute the program stored in the memory 113, so as to: activate, according to the main menu request instruction received by the first communications interface 112, the main menu in the master device in this embodiment; activate, according to the first remote control instruction received by the first communications interface 112, the peripheral submenu corresponding to the submenu activation option selected by using the first remote control instruction; and performs, according to the second remote control instruction received by the first communications interface 112, control on the peripheral device corresponding to the activated peripheral submenu.

The main menu in the master device in this embodiment includes at least one submenu activation option, where one submenu activation option corresponds to one peripheral device connected to the master device in this embodiment and is configured to activate a peripheral submenu corresponding to the corresponding peripheral device, and the peripheral submenu includes at least one control sub-option that is used to perform function control on the peripheral device corresponding to the peripheral submenu.

Optionally, the processor 111 may send, by using the second communications interface 114, the second remote control instruction to the peripheral device corresponding to the peripheral submenu selected by using the first remote control instruction, so as to control the peripheral device to perform an action corresponding to the second remote control instruction, and receive, by using the second communications interface 114, a remote control result sent by the peripheral device. The processor 111 may be a central processing unit (Central Processing Unit, CPU for short), or an application-specific integrated circuit (Application Specific Integrated Circuit, ASIC for short), or one or more integrated circuits configured to implement this embodiment of the present invention.

The master device provided in this embodiment may be configured to perform the procedure of the remote control method performed by the master device in the foregoing method embodiment. Specific working principles thereof are not further described. For details, refer to the description of the method embodiment.

The master device in this embodiment may be, but is not limited to, a television. Correspondingly, the peripheral device may be a DVD player, a set top box, a Blu-ray disc player, or the like.

The master device provided in this embodiment has the main menu, and also has the peripheral submenu that is used to remotely control each peripheral device, and the submenu activation option corresponding to each peripheral submenu is set in the main menu to activate the corresponding peripheral submenu. In this manner, menu cascading is implemented between the master device and each peripheral device corresponding to the master device. Based on this, by using a corresponding remote control device and receiving the remote control instruction sent by the remote control device, the master device in this embodiment may implement remote control on any peripheral device. In this way, when the user uses a different device, only one remote control device is required in a whole control process, with no need to use a different remote control device as in the prior art, thereby avoiding a problem of a matching error, improving convenience of performing remote control on the corresponding device when the user uses a different device, and improving efficiency of performing remote control on the corresponding device.

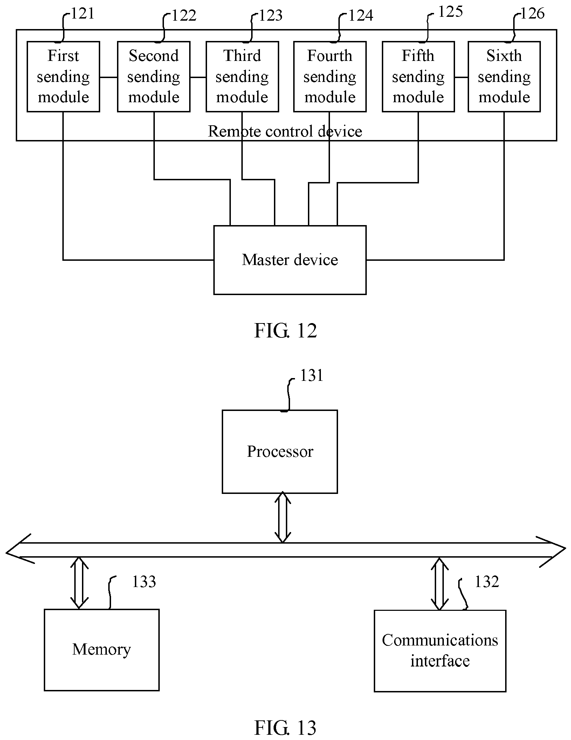

FIG. 12 is a schematic structural diagram of a remote control device according to an embodiment of the present invention. As shown in FIG. 12, the remote control device in this embodiment includes: a first sending module 121, a second sending module 122, and a third sending module 123.

The first sending module 121 is connected to a master device and configured to send a main menu request instruction to the master device, so that the master device activates a main menu in the master device according to the main menu request instruction, where the main menu includes at least one submenu activation option, and one submenu activation option corresponds to one peripheral device connected to the master device and is used to activate a peripheral submenu of the corresponding peripheral device, where the peripheral submenu includes at least one control sub-option that is used to perform function control on the peripheral device corresponding to the peripheral submenu.

The second sending module 122 is connected to the master device and configured to, after the first sending module 121 sends the main menu request instruction, send, to the master device, a first remote control instruction that is used to select the submenu activation option, so that the master device activates, according to the first remote control instruction, the peripheral submenu corresponding to the submenu activation option. Optionally, the second sending module 122 is also connected to the first sending module 121.

The third sending module 123 is connected to the master device and configured to, after the second sending module 122 sends the first remote control instruction, send, to the master device, a second remote control instruction that is used to select the control sub-option in the activated peripheral submenu, so that the master device performs, according to the second remote control instruction, control on the peripheral device corresponding to the activated peripheral submenu. Optionally, the third sending module 123 is also connected to the second sending module 122.

In an optional implementation manner, the main menu not only includes the at least one submenu activation option, but also further includes at least one control option that is used to perform function control on the master device. The remote control device in this embodiment further includes: a fourth sending module 124. The fourth sending module 124 is connected to the master device and configured to send, to the master device, a third remote control instruction that is used to select the control option in the main menu, so that the master device performs control on the master device itself according to the third remote control instruction.

In an optional implementation manner, the main menu not only includes the at least one submenu activation option, but also further includes a main activation option that is used to activate a master submenu corresponding to the master device, and the master submenu includes at least one control sub-option that is used to perform function control on the master device. Based on this, the remote control device in this embodiment further includes: a fifth sending module 125, and a sixth sending module 126.

The fifth sending module 125 is connected to the master device and configured to send, to the master device, a fourth remote control instruction that is used to select the main activation option, so that the master device activates the master submenu according to the fourth remote control instruction.

The sixth sending module 126 is connected to the master device and configured to, after the fifth sending module 125 sends the fourth remote control instruction, send, to the master device, a fifth remote control instruction that is used to select the control sub-option in the master submenu, so that the master device performs control on the master device itself according to the fifth remote control instruction. Optionally, the sixth sending module 126 is also connected to the fifth sending module 125.

The remote control device in this embodiment may be a remote controller, but is not limited to this. In addition, the master device in this embodiment may be, but is not limited to, a television. Correspondingly, the peripheral device may be a DVD player, a set top box, a Blu-ray disc player, or the like.

Each function module of the remote control device provided in this embodiment may be configured to perform the corresponding procedure of the remote control method performed by the remote control device in the foregoing method embodiment. Specific working principles thereof are not further described. For details, refer to the description of the method embodiment.

According to the remote control device in this embodiment, when performing remote control on the peripheral device, the remote control device first enables, by working with the master device provided in the foregoing embodiment and using the main menu request instruction, the master device to activate the main menu; then the remote control device activates the peripheral submenu corresponding to the master device by sending a remote control instruction for selecting a submenu activation option that can activate a peripheral submenu; and then the remote control device sends the remote control instruction for selecting a control sub-option in the activated peripheral submenu, so that the master device may control the corresponding peripheral device according to the remote control instruction, thereby achieving an objective of performing remote control on multiple peripheral devices by using one remote control device. In this way, when using a different device, a user does not need to use a different remote control device, but only needs to perform the foregoing simple remote control procedure again, and therefore, operation convenience and remote control efficiency are improved.

FIG. 13 is a schematic structural diagram of a remote control device according to another embodiment of the present invention. As shown in FIG. 13, the remote control device in this embodiment includes: a processor 131, a communications interface 132, a memory 133, and a bus. The processor 131, the communications interface 132 and the memory 133 are connected and communicate with each other by using the bus. The bus may be an ISA bus, a PCI bus, an EISA bus, or the like. The bus may be classified into an address bus, a data bus, a control bus, and the like. For ease of denotation, the bus is indicated by using only one thick line in FIG. 13; however, it does not indicate that there is only one bus or only one type of bus.

The memory 133 is configured to store a program. The program may include program code, where the program code includes a computer operation instruction. In addition, the memory 133 may also store various instructions, such as a main menu request instruction, a first remote control instruction, and a second remote control instruction. The memory 133 may include a high-speed RAM memory, and may also include a non-volatile memory (non-volatile memory), such as at least one disk memory.

The communications interface 132 is mainly responsible for implementing communication between the remote control device and a remotely controlled device. Specifically, the communications interface 132 is configured to send a main menu request instruction to a master device, so that the master device activates a main menu in the master device according to the main menu request instruction; further configured to, after the master device activates the main menu, send, to the master device, a first remote control instruction that is used to select a submenu activation option in the main menu, so that the master device activates, according to the first remote control instruction, a peripheral submenu corresponding to the submenu activation option; and configured to, after the master device activates the peripheral submenu corresponding to the submenu activation option, send, to the master device, a second remote control instruction that is used to select a control sub-option in the activated peripheral submenu, so that the master device performs, according to the second remote control instruction, control on a peripheral device corresponding to the activated peripheral submenu. The main menu in the master device includes at least one submenu activation option, and one submenu activation option corresponds to one peripheral device connected to the master device and is used to activate the peripheral submenu corresponding to the corresponding peripheral device, where the peripheral submenu includes at least one control sub-option that is used to perform function control on the peripheral device corresponding to the peripheral submenu. In specific implementation, the communications interface 132 may be a transmitter, such as an infrared transmitter.

The processor 131 is configured to execute the program stored in the memory 133 and mainly implement logic control on the remote control device, control on the communications bus 132, and the like. The processor 131 may be a CPU, or a specific ASIC, or one or more integrated circuits that are configured to implement this embodiment of the present invention.

The remote control device in this embodiment may be a remote controller, but is not limited to this.

Each function module of the remote control device provided in this embodiment may be configured to perform the corresponding procedure of the remote control method performed by the remote control device in the foregoing method embodiment. Specific working principles thereof are not further described. For details, refer to the description of the method embodiment.

According to the remote control device in this embodiment, when performing remote control on the peripheral device, the remote control device first enables, by working with the master device provided by the foregoing embodiment and using the main menu request instruction, the master device to activate the main menu; then the remote control device activates the peripheral submenu corresponding to the master device by sending a remote control instruction for selecting a submenu activation option that can activate a peripheral submenu; and then the remote control device sends the remote control instruction for selecting a control sub-option in the activated peripheral submenu, so that the master device may control the corresponding peripheral device according to the remote control instruction, thereby achieving an objective of performing remote control on multiple peripheral devices by using one remote control device. In this way, when using a different device, a user does not need to use a different remote control device, but only needs to perform the foregoing simple remote control procedure again, and therefore, operation convenience and remote control efficiency are improved.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A remote control method, comprising:
receiving (100), by a master device, a main menu request instruction sent by a remote control device, and activating a main menu in the master device according to the main menu request instruction, wherein the main menu comprises at least one submenu activation option, said at least one submenu activation option corresponds to one peripheral device connected to the master device and is used to activate a peripheral submenu corresponding to the corresponding peripheral device, wherein the peripheral submenu comprises at least one control sub-option that is used to perform function control on the peripheral device corresponding to the peripheral submenu;
receiving (200), by the master device, a first remote control instruction that is sent by the remote control device and used to select the submenu activation option, and activating, according to the first remote control instruction, the peripheral submenu corresponding to the submenu activation option; and
receiving (300), by the master device, a second remote control instruction that is sent by the remote control device and used to select the control sub-option in the activated peripheral submenu, and performing, according to the second remote control instruction, control on the peripheral device corresponding to the activated peripheral submenu, wherein the performing, by the master device according to the second remote control instruction, control on the peripheral device corresponding to the activated peripheral submenu comprises:
sending, by the master device, the second remote control instruction to the peripheral device corresponding to the activated peripheral submenu, so as to control the peripheral device corresponding to the activated peripheral submenu to perform an action corresponding to the second remote control instruction; and
receiving, by the master device, a remote control result that is returned by the peripheral device corresponding to the activated peripheral submenu, and displaying the remote control result by using the display screen of the master device;
**characterized in that** before the receiving (200), by the master device, a first remote control instruction that is sent by the remote control device and used to select the submenu activation option, the method comprises:
receiving (101), by the master device, control function description information that is sent by the peripheral device corresponding to the submenu activation option, whereby said control function description information is of the peripheral device corresponding to the submenu activation option; and
generating (102), by the master device according to the control function description information of the peripheral device corresponding to the submenu activation option, the peripheral submenu corresponding to the submenu activation option, and adding the submenu activation option to the main menu.

2. The remote control method according to claim 1, wherein the main menu further comprises at least one control option that is used to perform function control on the master device; and
the remote control method further comprises:
receiving, by the master device, a third remote control instruction that is sent by the remote control device and used to select the control option, and performing control on the master device itself according to the third remote control instruction.

3. The remote control method according to claim 1, wherein the main menu further comprises a main activation option that is used to activate a master submenu corresponding to the master device, and the master submenu comprises at least one control sub-option that is used to perform function control on the master device; and
the remote control method further comprises:
receiving, by the master device, a fourth remote control instruction that is sent by the remote control device and used to select the main activation option, and activating the master submenu according to the fourth remote control instruction; and
receiving, by the master device, a fifth remote control instruction that is sent by the remote control device and used to select the control sub-option in the master submenu, and performing control on the master device itself according to the fifth remote control instruction.

4. The remote control method according to claim 1, wherein the activating, by a master device, a main menu in the master device according to the main menu request instruction comprises:
acquiring, by the master device, the main menu according to the main menu request instruction and a prestored mapping relationship between an instruction and a main menu storage address, and displaying the main menu by using a display screen of the master device; and
the activating, by the master device according to the first remote control instruction, the peripheral submenu corresponding to the submenu activation option comprises:
acquiring, by the master device according to the first remote control instruction and a prestored mapping relationship between an instruction and a submenu storage address, the peripheral submenu corresponding to the submenu activation option, and displaying the peripheral submenu by using the display screen.

5. The remote control method according to any one of claims 1 to 4, wherein before the receiving (200), by the master device, a first remote control instruction that is sent by the remote control device and used to select the submenu activation option, the method comprises:
sending (110), by the master device, an activation instruction to the peripheral device corresponding to the submenu activation option, so that the peripheral device corresponding to the submenu activation option enters a working state.

6. The remote control method according to any one of claims 1 to 4, wherein before the receiving (200), by the master device, a first remote control instruction that is sent by the remote control device and used to select the submenu activation option, the method comprises:
receiving, by the master device, a registration request that is sent by the peripheral device corresponding to the submenu activation option, wherein the registration request comprises the peripheral submenu corresponding to the submenu activation option; and
adding, by the master device, the submenu activation option to the main menu.

7. The remote control method according to claim 4, wherein the displaying, by the master device, the main menu by using a display screen of the master device comprises:
displaying, by the master device in a horizontal and/or vertical display manner, the at least one submenu activation option in the main menu; and
the displaying, by the master device by using the display screen, the peripheral submenu corresponding to the submenu activation option comprises:
displaying, by the master device in a horizontal and/or vertical display manner, the at least one control sub-option in the peripheral submenu corresponding to the submenu activation option.

8. A master device, comprising:
a first receiving module (91), configured to receive a main menu request instruction sent by a remote control device;
a first activating module (92), configured to activate a main menu in the master device according to the main menu request instruction received by the first receiving module (91), wherein the main menu comprises at least one submenu activation option, said at least one submenu activation option corresponds to one peripheral device connected to the master device and is used to activate a peripheral submenu corresponding to the corresponding peripheral device, and the peripheral submenu comprises at least one control sub-option that is used to perform function control on the peripheral device corresponding to the peripheral submenu;
a second receiving module (93), configured to receive, after the first activating module (92) activates the main menu, a first remote control instruction that is sent by the remote control device and used to select the submenu activation option;
a second activating module (94), configured to activate, according to the first remote control instruction received by the second receiving module (93), the peripheral submenu corresponding to the submenu activation option;
a third receiving module (95), configured to receive, after the second activating module (94) activates the peripheral submenu corresponding to the submenu activation option, a second remote control instruction that is sent by the remote control device and used to select the control sub-option in the activated peripheral submenu; and
a first control module (96), configured to perform, according to the second remote control instruction received by the third receiving module, control on the peripheral device corresponding to the activated peripheral submenu,
whereby the first control module (96) comprises:
a sending unit (961), configured to send the second remote control instruction to the peripheral device corresponding to the activated peripheral submenu, so as to control the peripheral device corresponding to the activated peripheral submenu to perform an action corresponding to the second remote control instruction; and
a receiving unit (962), configured to receive, after the sending unit sends the second remote control instruction to the peripheral device corresponding to the activated peripheral submenu, a remote control result that is returned by the peripheral device corresponding to the activated peripheral submenu, and display the remote control result by using the display screen of the master device, **characterized by**
a seventh receiving module (995), configured to receive, before the second receiving module (93) receives the first remote control instruction, control function description information that is sent by the peripheral device corresponding to the submenu activation option, whereby said control function description information is of the peripheral device corresponding to the submenu activation option; and
a generating and adding module (996), configured to generate, according to the control function description information that is received by the seventh receiving module (995) and that is of the peripheral device corresponding to the submenu activation option, the peripheral submenu corresponding to the submenu activation option, and add the submenu activation option to the main menu.

9. The master device according to claim 8, wherein the main menu further comprises at least one control option that is used to perform function control on the master device; and
the master device further comprises:
a fourth receiving module (97), configured to receive a third remote control instruction that is sent by the remote control device and used to select the control option; and
a second control module (98), configured to perform control on the master device according to the third remote control instruction received by the fourth receiving module.

10. The master device according to claim 8, wherein the main menu further comprises a main activation option that is used to activate a master submenu corresponding to the master device, and the master submenu comprises at least one control sub-option that is used to perform function control on the master device; and
the master device further comprises:
a fifth receiving module (99), configured to receive a fourth remote control instruction that is sent by the remote control device and used to select the main activation option;
a third activating module (991), configured to activate the master submenu according to the fourth remote control instruction received by the fifth receiving module (99);
a sixth receiving module (992), configured to receive, after the third activating module (991) activates the master submenu, a fifth remote control instruction that is sent by the remote control device and used to select the control sub-option in the master submenu; and
a third control module (993), configured to perform control on the master device according to the fifth remote control instruction received by the sixth receiving module (992).

11. The master device according to claim 8, wherein the first activating module (92) is specifically configured to acquire the main menu according to the main menu request instruction and a prestored mapping relationship between an instruction and a main menu storage address, and display the main menu by using a display screen of the master device; and
the second activating module (94) is specifically configured to acquire, according to the first remote control instruction and a prestored mapping relationship between an instruction and a submenu storage address, the peripheral submenu corresponding to the submenu activation option, and display, by using the display screen, the peripheral submenu corresponding to the submenu activation option.

12. The master device according to any one of claims 8 to 11, further comprising:
a sending module (994), configured to send, before the second receiving module (93) receives the first remote control instruction, an activation instruction to the peripheral device corresponding to the submenu activation option, so that the peripheral device corresponding to the submenu activation option enters a working state.

13. The master device according to any one of claims 8 to 11, further comprising:
an eighth receiving module (997), configured to receive, before the second receiving module (93) receives the first remote control instruction, a registration request that is sent by the peripheral device corresponding to the submenu activation option, wherein the registration request comprises the peripheral submenu corresponding to the submenu activation option; and
an adding module (998), configured to add the submenu activation option to the main menu.

14. The master device according to claim 11, wherein that the first activating module (92) is configured to display the main menu by using a display screen of the master device comprises that: the first activating module (92) is specifically configured to display, in a horizontal or vertical display manner, at least one peripheral submenu in the main menu; and
that the second activating module (94) is configured to display, by using the display screen, the peripheral submenu corresponding to the submenu activation option comprises that: the second activating module (94) is specifically configured to display, in a horizontal or vertical display manner, the at least one control sub-option in the peripheral submenu corresponding to the submenu activation option.

15. A remote control system comprising a remote control device and a master device according to any one of claims 8 to 14, wherein the remote control device comprises:
a first sending module (121), configured to send a main menu request instruction to a master device, so that the master device activates a main menu in the master device according to the main menu request instruction, wherein the main menu comprises at least one submenu activation option, said at least one submenu activation option corresponds to one peripheral device connected to the master device and is used to activate a peripheral submenu corresponding to the corresponding peripheral device, and the peripheral submenu comprises at least one control sub-option that is used to perform function control on the peripheral device corresponding to the peripheral submenu;
a second sending module (122), configured to, after the first sending module sends the main menu request instruction, send, to the master device, a first remote control instruction that is used to select the submenu activation option, so that the master device activates, according to the first remote control instruction, the peripheral submenu corresponding to the submenu activation option; and
a third sending module (123), configured to, after the second sending module sends the first remote control instruction, send, to the master device, a second remote control instruction that is used to select the control sub-option in the activated peripheral submenu, so that the master device performs, according to the second remote control instruction, control on the peripheral device corresponding to the activated peripheral submenu.

16. The remote control system according to claim 15, wherein the main menu further comprises at least one control option that is used to perform function control on the master device; and
the remote control device further comprises:
a fourth sending module (124), configured to send, to the master device, a third remote control instruction that is used to select the control option, so that the master device performs control on the master device itself according to the third remote control instruction.

17. The remote control system according to claim 16, wherein the main menu further comprises a main activation option that is used to activate a master submenu corresponding to the master device, and the master submenu comprises at least one control sub-option that is used to perform function control on the master device; and
the remote control device further comprises:
a fifth sending module (125), configured to send, to the master device, a fourth remote control instruction that is used to select the main activation option, so that the master device activates the master submenu according to the fourth remote control instruction; and
a sixth sending module (126), configured to, after the fifth sending module sends the fourth remote control instruction, send, to the master device, a fifth remote control instruction that is used to select the control sub-option in the master submenu, so that the master device performs control on the master device itself according to the fifth remote control instruction.

## Patentansprüche

1. Femsteuerungsverfahren, umfassend:
Empfangen (100), in einer Mastervorrichtung, eines Hauptmenüanforderungsbefehls, der von einer Fernsteuerungsvorrichtung gesendet wird, und Aktivieren eines Hauptmenüs in der Mastervorrichtung gemäß dem Hauptmenüanforderungsbefehl, wobei das Hauptmenü mindestens eine Untermenüaktivierungsoption umfasst, wobei die mindestens eine Untermenüaktivierungsoption einer Peripherievorrichtung entspricht, die mit der Mastervorrichtung verbunden ist, und verwendet wird zum Aktivieren eines Peripherieuntermenüs, das der entsprechenden Peripherievorrichtung entspricht, wobei das Peripherieuntermenü mindestens eine Steuerungsunteroption umfasst, die verwendet wird zum Ausführen einer Funktionssteuerung an der Peripherievorrichtung, die dem Peripherieuntermenü entspricht;
Empfangen (200), in der Mastervorrichtung, eines ersten Fernsteuerungsbefehls, der von der Fernsteuerungsvorrichtung gesendet wird und der verwendet wird zum Auswählen der Untermenüaktivierungsoption; und Aktivieren, gemäß dem ersten Fernsteuerungsbefehl, des Peripherieuntermenüs, das der Untermenüaktivierungsoption entspricht; und
Empfangen (300), in der Mastervorrichtung, eines zweiten Fernsteuerungsbefehls, der von der Fernsteuerungsvorrichtung gesendet wird und der verwendet wird zum Auswählen der Steuerungsunteroption in dem aktivierten Peripherieuntermenü, und Ausführen, gemäß dem zweiten Fernsteuerungsbefehl, einer Steuerung an der Peripherievorrichtung, die dem aktivierten Peripherieuntermenü entspricht, wobei das Ausführen, durch die Mastervorrichtung gemäß dem zweiten Fernsteuerungsbefehl, einer Steuerung an der Peripherievorrichtung, die dem aktivierten Peripherieuntermenü entspricht, umfasst:
Senden des zweiten Fernsteuerungsbefehls von der Mastervorrichtung an die Peripherievorrichtung, die dem aktivierten Peripherieuntermenü entspricht, um die Peripherievorrichtung zu steuern, die dem aktivierten Peripherieuntermenü entspricht, um eine Aktion auszuführen, die dem zweiten Fernsteuerungsbefehl entspricht; und
Empfangen, in der Mastervorrichtung, eines Fernsteuerungsergebnisses, das von der Peripherievorrichtung zurückgesendet wird, die dem aktivierten Peripherieuntermenü entspricht, und Anzeigen des Fernsteuerungsergebnisses, indem der Anzeigebildschirm der Mastervorrichtung verwendet wird;
**dadurch gekennzeichnet, dass**
das Verfahren, vor dem Empfangen (200), in der Mastervorrichtung, eines ersten Fernsteuerungsbefehls, der von der Fernsteuerungsvorrichtung gesendet wird und der verwendet wird zum Auswählen der Untermenüaktivierungsoption, umfasst:
Empfangen (101), in der Mastervorrichtung, von Beschreibungsinformationen einer Steuerungsfunktion, die von der Peripherievorrichtung gesendet werden, die der Untermenüaktivierungsoption entspricht, wobei die Beschreibungsinformationen der Steuerungsfunktion von der Peripherievorrichtung stammen, die der Untermenüaktivierungsoption entspricht; und
Erzeugen (102), in der Mastervorrichtung gemäß den Beschreibungsinformationen der Steuerungsfunktion der Peripherievorrichtung, die der Untermenüaktivierungsoption entspricht, des Peripherieuntermenüs, das der Untermenüaktivierungsoption entspricht;
und Hinzufügen der Untermenüaktivierungsoption zu dem Hauptmenü.

2. Fernsteuerungsverfahren nach Anspruch 1, wobei das Hauptmenü außerdem mindestens eine Steuerungsoption umfasst, die verwendet wird zum Ausführen einer Funktionssteuerung an der Mastervorrichtung; und
wobei das Fernsteuerungsverfahren außerdem umfasst:
Empfangen, in der Mastervorrichtung, eines dritten Fernsteuerungsbefehls, der von der Fernsteuerungsvorrichtung gesendet wird und der verwendet wird zum Auswählen der Steuerungsoption; und Ausführen einer Steuerung an der Mastervorrichtung selbst gemäß dem dritten Fernsteuerungsbefehl.

3. Fernsteuerungsverfahren nach Anspruch 1, wobei das Hauptmenü außerdem eine Hauptaktivierungsoption umfasst, die verwendet wird zum Aktivieren eines Masteruntermenüs, das der Mastervorrichtung entspricht, und wobei das Masteruntermenü mindestens eine Steuerungsunteroption umfasst, die verwendet wird zum Ausführen einer Funktionssteuerung an der Mastervorrichtung; und
wobei das Fernsteuerungsverfahren außerdem umfasst:
Empfangen, in der Mastervorrichtung, eines vierten Fernsteuerungsbefehls, der von der Fernsteuerungsvorrichtung gesendet wird und der verwendet wird zum Auswählen der Hauptaktivierungsoption; und Aktivieren des Masteruntermenüs gemäß dem vierten Fernsteuerungsbefehl; und
Empfangen, in der Mastervorrichtung, eines fünften Fernsteuerungsbefehls, der von der Fernsteuerungsvorrichtung gesendet wird und der verwendet wird zum Auswählen der Steuerungsunteroption in dem Masteruntermenü; und Ausführen einer Steuerung an der Mastervorrichtung selbst gemäß dem fünften Fernsteuerungsbefehl.

4. Fernsteuerungsverfahren nach Anspruch 1, wobei das Aktivieren, durch eine Mastervorrichtung, eines Hauptmenüs in der Mastervorrichtung gemäß dem Hauptmenüanforderungsbefehl umfasst:
Erlangen, durch die Mastervorrichtung, des Hauptmenüs gemäß dem Hauptmenüanforderungsbefehl und einer zuvor gespeicherten Zuordnungsbeziehung zwischen einem Befehl und einer Hauptmenüspeicheradresse; und Anzeigen des Hauptmenüs, indem ein Anzeigebildschirm der Mastervorrichtung verwendet wird; und
wobei das Aktivieren, durch die Mastervorrichtung gemäß dem ersten Fernsteuerungsbefehl, des Peripherieuntermenüs, das der Untermenüaktivierungsoption entspricht, umfasst:
Erlangen, durch die Mastervorrichtung gemäß dem ersten Fernsteuerungsbefehl und einer zuvor gespeicherten Zuordnungsbeziehung zwischen einem Befehl und einer Untermenüspeicheradresse, des Peripherieuntermenüs, das der Untermenüaktivierungsoption entspricht, und Anzeigen des Peripherieuntermenüs, indem der Anzeigebildschirm verwendet wird.

5. Fernsteuerungsverfahren nach einem der Ansprüche 1 bis 4, wobei das Verfahren, vor dem Empfangen (200), in der Mastervorrichtung, eines ersten Fernsteuerungsbefehls, der von der Fernsteuerungsvorrichtung gesendet wird und der verwendet wird zum Auswählen der Untermenüaktivierungsoption, umfasst:
Senden (110) eines Aktivierungsbefehls von der Mastervorrichtung an die Peripherievorrichtung, die der Untermenüaktivierungsoption entspricht, sodass die Peripherievorrichtung, die der Untermenüaktivierungsoption entspricht, in einen Arbeitszustand eintritt.

6. Fernsteuerungsverfahren nach einem der Ansprüche 1 bis 4, wobei das Verfahren, vor dem Empfangen (200), in der Mastervorrichtung, eines ersten Fernsteuerungsbefehls, der von der Fernsteuerungsvorrichtung gesendet wird und der verwendet wird zum Auswählen der Untermenüaktivierungsoption, umfasst:
Empfangen, in der Mastervorrichtung, einer Registrierungsanforderung, die von der Peripherievorrichtung gesendet wird, die der Untermenüaktivierungsoption entspricht, wobei die Registrierungsanforderung das Peripherieuntermenü umfasst, das der Untermenüaktivierungsoption entspricht; und
Hinzufügen, durch die Mastervorrichtung, der Untermenüaktivierungsoption zu dem Hauptmenü.

7. Fernsteuerungsverfahren nach Anspruch 4, wobei das Anzeigen des Hauptmenüs durch die Mastervorrichtung, indem ein Anzeigebildschirm der Mastervorrichtung verwendet wird, umfasst:
Anzeigen, durch die Mastervorrichtung in einer horizontalen und/oder einer vertikalen Anzeigeform, der mindestens einen Untermenüaktivierungsoption in dem Hauptmenü; und
wobei das Anzeigen, durch die Mastervorrichtung, des Peripherieuntermenüs, das der Untermenüaktivierungsoption entspricht, indem der Anzeigebildschirm verwendet wird, umfasst:
Anzeigen, durch die Mastervorrichtung in einer horizontalen und/oder einer vertikalen Anzeigeform, der mindestens einen Steuerungsunteroption in dem Peripherieuntermenü, das der Untermenüaktivierungsoption entspricht.

8. Mastervorrichtung, umfassend:
ein erstes Empfangsmodul (91), das konfiguriert ist zum Empfangen eines Hauptmenüanforderungsbefehls, der von einer Fernsteuerungsvorrichtung gesendet wird;
ein erstes Aktivierungsmodul (92), das konfiguriert ist zum Aktivieren eines Hauptmenüs in der Mastervorrichtung gemäß dem Hauptmenüanforderungsbefehl, der von dem ersten Empfangsmodul (91) empfangen wird, wobei das Hauptmenü mindestens eine Untermenüaktivierungsoption umfasst, wobei die mindestens eine Untermenüaktivierungsoption einer Peripherievorrichtung entspricht, die mit der Mastervorrichtung verbunden ist, und verwendet wird zum Aktivieren eines Peripherieuntermenüs, das der entsprechenden Peripherievorrichtung entspricht, und wobei das Peripherieuntermenü mindestens eine Steuerungsunteroption umfasst, die verwendet wird zum Ausführen einer Funktionssteuerung an der Peripherievorrichtung, die dem Peripherieuntermenü entspricht;
ein zweites Empfangsmodul (93), das konfiguriert ist zum Empfangen, nachdem das erste Aktivierungsmodul (92) das Hauptmenü aktiviert hat, eines ersten Fernsteuerungsbefehls, der von der Fernsteuerungsvorrichtung gesendet wird und der verwendet wird zum Auswählen der Untermenüaktivierungsoption;
ein zweites Aktivierungsmodul (94), das konfiguriert ist zum Aktivieren, gemäß dem ersten Fernsteuerungsbefehl, der von dem zweiten Empfangsmodul (93) empfangen wird, des Peripherieuntermenüs, das der Untermenüaktivierungsoption entspricht;
ein drittes Empfangsmodul (95), das konfiguriert ist zum Empfangen, nachdem das zweite Aktivierungsmodul (94) das Peripherieuntermenü aktiviert hat, das der Untermenüaktivierungsoption entspricht, eines zweiten Fernsteuerungsbefehls, der von der Fernsteuerungsvorrichtung gesendet wird und der verwendet wird zum Auswählen der Steuerungsunteroption in dem aktivierten Peripherieuntermenü; und
ein erstes Steuerungsmodul (96), das konfiguriert ist zum Ausführen, gemäß dem zweiten Fernsteuerungsbefehl, der von dem dritten Empfangsmodul empfangen wird, einer Steuerung an der Peripherievorrichtung, die dem aktivierten Peripherieuntermenü entspricht, wobei das erste Steuerungsmodul (96) umfasst:
eine Sendeeinheit (961), die konfiguriert ist zum Senden des zweiten Fernsteuerungsbefehls an die Peripherievorrichtung, die dem aktivierten Peripherieuntermenü entspricht, um die Peripherievorrichtung zu steuern, die dem aktivierten Peripherieuntermenü entspricht, um eine Aktion auszuführen, die dem zweiten Fernsteuerungsbefehl entspricht; und
eine Empfangseinheit (962), die konfiguriert ist zum Empfangen, nachdem die Sendeeinheit den zweiten Fernsteuerungsbefehl an die Peripherievorrichtung gesendet hat, die dem aktivierten Peripherieuntermenü entspricht, eines Fernsteuerungsergebnisses, das von der Peripherievorrichtung zurückgesendet wird, die dem aktivierten Peripherieuntermenü entspricht; und zum Anzeigen des Fernsteuerungsergebnisses, indem der Anzeigebildschirm der Mastervorrichtung verwendet wird, **gekennzeichnet durch**:
ein siebtes Empfangsmodul (995), das konfiguriert ist zum Empfangen, bevor das zweite Empfangsmodul (93) den ersten Fernsteuerungsbefehl empfängt, von Beschreibungsinformationen einer Steuerungsfunktion, die von der Peripherievorrichtung gesendet werden, die der Untermenüaktivierungsoption entspricht, wobei die Beschreibungsinformationen der Steuerungsfunktion von der Peripherievorrichtung stammen, die der Untermenüaktivierungsoption entspricht; und
ein Erzeugungs- und Hinzufügungsmodul (996), das konfiguriert ist zum Erzeugen, gemäß den Beschreibungsinformationen der Steuerungsfunktion, die von dem siebten Empfangsmodul (995) empfangen werden und die von der Peripherievorrichtung stammen,
die der Untermenüaktivierungsoption entspricht, des Peripherieuntermenüs, das der Untermenüaktivierungsoption entspricht; und zum Hinzufügen der Untermenüaktivierungsoption zu dem Hauptmenü.

9. Mastervorrichtung nach Anspruch 8, wobei das Hauptmenü außerdem mindestens eine Steuerungsoption umfasst, die verwendet wird zum Ausführen einer Funktionssteuerung an der Mastervorrichtung; und
wobei die Mastervorrichtung außerdem umfasst:
ein viertes Empfangsmodul (97), das konfiguriert ist zum Empfangen eines dritten Fernsteuerungsbefehls, der von der Fernsteuerungsvorrichtung gesendet wird und der verwendet wird zum Auswählen der Steuerungsoption; und
ein zweites Steuerungsmodul (98), das konfiguriert ist zum Ausführen einer Steuerung an der Mastervorrichtung gemäß dem dritten Fernsteuerungsbefehl, der von dem vierten Empfangsmodul empfangen wird.

10. Mastervorrichtung nach Anspruch 8, wobei das Hauptmenü außerdem eine Hauptaktivierungsoption umfasst, die verwendet wird zum Aktivieren eines Masteruntermenüs, das der Mastervorrichtung entspricht, und wobei das Masteruntermenü mindestens eine Steuerungsunteroption umfasst, die verwendet wird zum Ausführen einer Funktionssteuerung an der Mastervorrichtung; und
wobei die Mastervorrichtung außerdem umfasst:
ein fünftes Empfangsmodul (99), das konfiguriert ist zum Empfangen eines vierten Fernsteuerungsbefehls, der von der Fernsteuerungsvorrichtung gesendet wird und der verwendet wird zum Auswählen der Hauptaktivierungsoption;
ein drittes Aktivierungsmodul (991), das konfiguriert ist zum Aktivieren des Masteruntermenüs gemäß dem vierten Fernsteuerungsbefehl, der von dem fünften Empfangsmodul (99); empfangen wird;
ein sechstes Empfangsmodul (992), das konfiguriert ist zum Empfangen, nachdem das dritte Aktivierungsmodul (991) das Masteruntermenü aktiviert hat, eines fünften Fernsteuerungsbefehls, der von der Fernsteuerungsvorrichtung gesendet wird und der verwendet wird zum Auswählen der Steuerungsunteroption in dem Masteruntermenü; und
ein drittes Steuerungsmodul (993), das konfiguriert ist zum Ausführen einer Steuerung an der Mastervorrichtung gemäß dem fünften Fernsteuerungsbefehl, der von dem sechsten Empfangsmodul (992) empfangen wird.

11. Mastervorrichtung nach Anspruch 8, wobei das erste Aktivierungsmodul (92) insbesondere konfiguriert ist zum Erlangen des Hauptmenüs gemäß dem Hauptmenüanforderungsbefehl und einer zuvor gespeicherten Zuordnungsbeziehung zwischen einem Befehl und einer Hauptmenüspeicheradresse; und zum Anzeigen des Hauptmenüs, indem ein Anzeigebildschirm der Mastervorrichtung verwendet wird; und
wobei das zweite Aktivierungsmodul (94) insbesondere konfiguriert ist zum Erlangen, gemäß dem ersten Fernsteuerungsbefehl und einer zuvor gespeicherten Zuordnungsbeziehung zwischen einem Befehl und einer Untermenüspeicheradresse, des Peripherieuntermenüs, das der Untermenüaktivierungsoption entspricht; und zum Anzeigen, indem der Anzeigebildschirm verwendet wird, des Peripherieuntermenüs, das der Untermenüaktivierungsoption entspricht.

12. Mastervorrichtung nach einem der Ansprüche 8 bis 11, die außerdem umfasst:
ein Sendemodul (994), das konfiguriert ist zum Senden, bevor das zweite Empfangsmodul (93) den ersten Fernsteuerungsbefehl empfängt, eines Aktivierungsbefehls an die Peripherievorrichtung, die der Untermenüaktivierungsoption entspricht, sodass die Peripherievorrichtung, die der Untermenüaktivierungsoption entspricht, in einen Arbeitszustand eintritt.

13. Mastervorrichtung nach einem der Ansprüche 8 bis 11, die außerdem umfasst:
ein achtes Empfangsmodul (997), das konfiguriert ist zum Empfangen, bevor das zweite Empfangsmodul (93) den ersten Fernsteuerungsbefehl empfängt, einer Registrierungsanforderung, die von der Peripherievorrichtung gesendet wird, die der Untermenüaktivierungsoption entspricht, wobei die Registrierungsanforderung das Peripherieuntermenü umfasst, das der Untermenüaktivierungsoption entspricht; und
ein Hinzufügungsmodul (998), das konfiguriert ist zum Hinzufügen der Untermenüaktivierungsoption zu dem Hauptmenü.

14. Mastervorrichtung nach Anspruch 11, wobei die Tatsache, dass das erste Aktivierungsmodul (92) konfiguriert ist zum Anzeigen des Hauptmenüs, indem ein Anzeigebildschirm der Mastervorrichtung verwendet wird, umfasst, dass das erste Aktivierungsmodul (92) insbesondere konfiguriert ist zum Anzeigen, in einer horizontalen oder einer vertikalen Anzeigeform, mindestens eines Peripherieuntermenüs in dem Hauptmenü; und
wobei die Tatsache, dass das zweite Aktivierungsmodul (94) konfiguriert ist zum Anzeigen, indem der Anzeigebildschirm verwendet wird, des Peripherieuntermenüs, das der Untermenüaktivierungsoption entspricht, umfasst, dass das zweite Aktivierungsmodul (94) insbesondere konfiguriert ist zum Anzeigen, in einer horizontalen oder einer vertikalen Anzeigeform, der mindestens einen Steuerungsunteroption in dem Peripherieuntermenü, das der Untermenüaktivierungsoption entspricht.

15. Fernsteuerungssystem, das eine Fernsteuerungsvorrichtung und eine Mastervorrichtung nach einem der Ansprüche 8 bis 14 umfasst, wobei die Fernsteuerungsvorrichtung umfasst:
ein erstes Sendemodul (121), das konfiguriert ist zum Senden eines Hauptmenüanforderungsbefehls an eine Mastervorrichtung, sodass die Mastervorrichtung ein Hauptmenü in der Mastervorrichtung gemäß dem Hauptmenüanforderungsbefehl aktiviert, wobei das Hauptmenü mindestens eine Untermenüaktivierungsoption umfasst,
wobei die mindestens eine Untermenüaktivierungsoption einer Peripherievorrichtung entspricht, die mit der Mastervorrichtung verbunden ist, und verwendet wird zum Aktivieren eines Peripherieuntermenüs, das der entsprechenden Peripherievorrichtung entspricht, und wobei das Peripherieuntermenü mindestens eine Steuerungsunteroption umfasst, die verwendet wird zum Ausführen einer Funktionssteuerung an der Peripherievorrichtung, die dem Peripherieuntermenü entspricht;
ein zweites Sendemodul (122), das konfiguriert ist zum, nachdem das erste Sendemodul den Hauptmenüanforderungsbefehl gesendet hat, Senden, an die Mastervorrichtung, eines ersten Fernsteuerungsbefehls, der verwendet wird zum Auswählen der Untermenüaktivierungsoption, sodass die Mastervorrichtung gemäß dem ersten Fernsteuerungsbefehl das Peripherieuntermenü aktiviert, das der Untermenüaktivierungsoption entspricht; und
ein drittes Sendemodul (123), das konfiguriert ist zum, nachdem das zweite Sendemodul den ersten Fernsteuerungsbefehl gesendet hat, Senden, an die Mastervorrichtung, eines zweiten Fernsteuerungsbefehls, der verwendet wird zum Auswählen der Steuerungsunteroption in dem aktivierten Peripherieuntermenü, sodass die Mastervorrichtung gemäß dem zweiten Fernsteuerungsbefehl, eine Steuerung an der Peripherievorrichtung ausführt, die dem aktivierten Peripherieuntermenü entspricht.

16. Fernsteuerungssystem nach Anspruch 15, wobei das Hauptmenü außerdem mindestens eine Steuerungsoption umfasst, die verwendet wird zum Ausführen einer Funktionssteuerung an der Mastervorrichtung; und
wobei die Fernsteuerungsvorrichtung außerdem umfasst:
ein viertes Sendemodul (124), das konfiguriert ist zum Senden, an die Mastervorrichtung, eines dritten Fernsteuerungsbefehls, der verwendet wird zum Auswählen der Steuerungsoption, sodass die Mastervorrichtung eine Steuerung an der Mastervorrichtung selbst gemäß dem dritten Fernsteuerungsbefehl ausführt.

17. Fernsteuerungssystem nach Anspruch 16, wobei das Hauptmenü außerdem eine Hauptaktivierungsoption umfasst, die verwendet wird zum Aktivieren eines Masteruntermenüs, das der Mastervorrichtung entspricht, und wobei das Masteruntermenü mindestens eine Steuerungsunteroption umfasst, die verwendet wird zum Ausführen einer Funktionssteuerung an der Mastervorrichtung; und
wobei die Fernsteuerungsvorrichtung außerdem umfasst:
ein fünftes Sendemodul (125), das konfiguriert ist zum Senden, an die Mastervorrichtung, eines vierten Fernsteuerungsbefehls, der verwendet wird zum Auswählen der Hauptaktivierungsoption, sodass die Mastervorrichtung das Masteruntermenü gemäß dem vierten Fernsteuerungsbefehl aktiviert; und
ein sechstes Sendemodul (126), das konfiguriert ist zum, nachdem das fünfte Sendemodul den vierten Fernsteuerungsbefehl gesendet hat, Senden, an die Mastervorrichtung, eines fünften Fernsteuerungsbefehls, der verwendet wird zum Auswählen der Steuerungsunteroption in dem Masteruntermenü, sodass die Mastervorrichtung eine Steuerung an der Mastervorrichtung selbst gemäß dem fünften Fernsteuerungsbefehl ausführt.

## Revendications

1. Procédé de télécommande, comprenant les étapes consistant à :
recevoir (100), par un dispositif maître, une instruction de demande de menu principal, envoyée par un dispositif de télécommande, et activer un menu principal sur le dispositif maître selon l'instruction de demande de menu principal, le menu principal comprenant au moins une option d'activation de sous-menu, ladite au moins une option d'activation de sous-menu correspondant à un dispositif périphérique connecté au dispositif maître et étant utilisée pour activer un sous-menu de périphérique qui correspond au dispositif périphérique correspondant, le sous-menu de périphérique comprenant au moins une sous-option de commande qui est utilisée pour réaliser une commande de fonction sur le dispositif périphérique qui correspond au sous-menu de périphérique ;
recevoir (200), par le dispositif maître, une première instruction de télécommande qui est envoyée par le dispositif de télécommande et qui est utilisée pour sélectionner l'option d'activation de sous-menu, et activer, selon la première instruction de télécommande, le sous-menu de périphérique qui correspond à l'option d'activation de sous-menu ; et
recevoir (300), par le dispositif maître, une deuxième instruction de télécommande qui est envoyée par le dispositif de télécommande et qui est utilisée pour sélectionner la sous-option de commande dans le sous-menu de périphérique activé, et réaliser, selon la deuxième instruction de télécommande, une commande sur le dispositif périphérique qui correspond au sous-menu de périphérique activé, la réalisation, par le dispositif maître selon la deuxième instruction de télécommande, d'une commande sur le dispositif périphérique qui correspond au sous-menu de périphérique activé comprenant les étapes consistant à :
envoyer, par le dispositif maître, la deuxième instruction de télécommande au dispositif périphérique qui correspond au sous-menu de périphérique activé, de manière à commander le dispositif périphérique qui correspond au sous-menu de périphérique activé pour réaliser une action qui correspond à la deuxième instruction de télécommande ; et
recevoir, par le dispositif maître, un résultat de télécommande qui est renvoyé par le dispositif périphérique qui correspond au sous-menu de périphérique activé, et afficher le résultat de télécommande au moyen de l'écran d'affichage du dispositif maître ;
**caractérisé en ce que** :
le procédé comprend, avant la réception (200), par le dispositif maître, d'une première instruction de télécommande qui est envoyée par le dispositif de télécommande et qui est utilisée pour sélectionner l'option d'activation de sous-menu, les étapes consistant à :
recevoir (101), par le dispositif maître, une information de description de fonction de commande qui est envoyée par le dispositif périphérique qui correspond à l'option d'activation de sous-menu, ladite information de description de fonction de commande étant du dispositif périphérique qui correspond à l'option d'activation de sous-menu ; et
générer (102), par le dispositif maître selon l'information de description de fonction de commande du dispositif périphérique qui correspond à l'option d'activation de sous-menu, le sous-menu de périphérique qui correspond à l'option d'activation de sous-menu, et ajouter l'option d'activation de sous-menu au menu principal.

2. Procédé de télécommande selon la revendication 1, le menu principal comprenant en outre au moins une option de commande qui est utilisée pour réaliser une commande de fonction sur le dispositif maître ; et
le procédé de télécommande comprenant en outre l'étape consistant à :
recevoir, par le dispositif maître, une troisième instruction de télécommande qui est envoyée par le dispositif de télécommande et qui est utilisée pour sélectionner l'option de commande, et réaliser une commande sur le dispositif maître lui-même selon la troisième instruction de télécommande.

3. Procédé de télécommande selon la revendication 1, le menu principal comprenant en outre une option d'activation principale qui est utilisée pour activer un sous-menu de maître qui correspond au dispositif maître, et le sous-menu de maître comprenant au moins une sous-option de commande qui est utilisée pour réaliser une commande de fonction sur le dispositif maître ; et
le procédé de télécommande comprenant en outre les étapes consistant à :
recevoir, par le dispositif maître, une quatrième instruction de télécommande qui est envoyée par le dispositif de télécommande et qui est utilisée pour sélectionner l'option d'activation principale, et activer le sous-menu de maître selon la quatrième instruction de télécommande ; et
recevoir, par le dispositif maître, une cinquième instruction de télécommande qui est envoyée par le dispositif de télécommande et qui est utilisée pour sélectionner la sous-option de commande dans le sous-menu de maître, et réaliser une commande sur le dispositif maître lui-même selon la cinquième instruction de télécommande.

4. Procédé de télécommande selon la revendication 1, dans lequel l'activation, par un dispositif maître, d'un menu principal sur le dispositif maître selon l'instruction de demande de menu principal comprend l'étape consistant à :
acquérir, par le dispositif maître, le menu principal selon l'instruction de demande de menu principal et une relation de concordance préstockée entre une instruction et une adresse de stockage de menu principal, et afficher le menu principal au moyen d'un écran d'affichage du dispositif maître ; et
l'activation, par le dispositif maître selon la première instruction de télécommande, du sous-menu de périphérique qui correspond à l'option d'activation de sous-menu comprend l'étape consistant à :
acquérir, par le dispositif maître selon la première instruction de télécommande et une relation de concordance préstockée entre une instruction et une adresse de stockage de sous-menu, le sous-menu de périphérique qui correspond à l'option d'activation de sous-menu, et afficher le sous-menu de périphérique au moyen de l'écran d'affichage.

5. Procédé de télécommande selon l'une quelconque des revendications 1 à 4, le procédé comprenant, avant la réception (200), par le dispositif maître, d'une première instruction de télécommande qui est envoyée par le dispositif de télécommande et qui est utilisée pour sélectionner l'option d'activation de sous-menu, l'étape consistant à :
envoyer (110), par le dispositif maître, une instruction d'activation au dispositif périphérique qui correspond à l'option d'activation de sous-menu, de sorte que le dispositif périphérique qui correspond à l'option d'activation de sous-menu entre dans un état de travail.

6. Procédé de télécommande selon l'une quelconque des revendications 1 à 4, le procédé comprenant, avant la réception (200), par le dispositif maître, d'une première instruction de télécommande qui est envoyée par le dispositif de télécommande et qui est utilisée pour sélectionner l'option d'activation de sous-menu, les étapes consistant à :
recevoir, par le dispositif maître, une demande d'enregistrement qui est envoyée par le dispositif périphérique qui correspond à l'option d'activation de sous-menu, la demande d'enregistrement comprenant le sous-menu de périphérique qui correspond à l'option d'activation de sous-menu ; et
ajouter, par le dispositif maître, l'option d'activation de sous-menu au menu principal.

7. Procédé de télécommande selon la revendication 4, dans lequel l'affichage, par le dispositif maître, du menu principal au moyen d'un écran d'affichage du dispositif maître comprend l'étape consistant à :
afficher, par le dispositif maître dans un mode d'affichage horizontal et/ou vertical, l'au moins une option d'activation de sous-menu dans le menu principal ; et
l'affichage, par le dispositif maître au moyen de l'écran d'affichage, du sous-menu de périphérique qui correspond à l'option d'activation de sous-menu comprend l'étape consistant à :
afficher, par le dispositif maître dans un mode d'affichage horizontal et/ou vertical, l'au moins une sous-option de commande dans le sous-menu de périphérique qui correspond à l'option d'activation de sous-menu.

8. Dispositif maître, comprenant :
un premier module de réception (91), conçu pour recevoir une instruction de demande de menu principal, envoyée par un dispositif de télécommande ;
un premier module d'activation (92), configuré pour activer un menu principal sur le dispositif maître selon l'instruction de demande de menu principal reçue par le premier module de réception (91), le menu principal comprenant au moins une option d'activation de sous-menu, ladite au moins une option d'activation de sous-menu correspondant à un dispositif périphérique connecté au dispositif maître et étant utilisée pour activer un sous-menu de périphérique qui correspond au dispositif périphérique correspondant, et le sous-menu de périphérique comprenant au moins une sous-option de commande qui est utilisée pour réaliser une commande de fonction sur le dispositif périphérique qui correspond au sous-menu de périphérique ;
un deuxième module de réception (93), configuré pour recevoir, après l'activation du menu principal par le premier module d'activation (92), une première instruction de télécommande qui est envoyée par le dispositif de télécommande et qui est utilisée pour sélectionner l'option d'activation de sous-menu ;
un deuxième module d'activation (94), configuré pour activer, selon la première instruction de télécommande reçue par le deuxième module de réception (93), le sous-menu de périphérique qui correspond à l'option d'activation de sous-menu ;
un troisième module de réception (95), configuré pour recevoir, après l'activation, par le deuxième module d'activation (94), du sous-menu de périphérique qui correspond à l'option d'activation de sous-menu, une deuxième instruction de télécommande qui est envoyée par le dispositif de télécommande et qui est utilisée pour sélectionner la sous-option de commande dans le sous-menu de périphérique activé ; et
un premier module de commande (96), configuré pour réaliser, selon la deuxième instruction de télécommande reçue par le troisième module de réception, une commande sur le dispositif périphérique qui correspond au sous-menu de périphérique activé, le premier module de commande (96) comprenant :
une unité d'envoi (961), configurée pour envoyer la deuxième instruction de télécommande au dispositif périphérique qui correspond au sous-menu de périphérique activé, de manière à commander le dispositif périphérique qui correspond au sous-menu de périphérique activé pour réaliser une action qui correspond à la deuxième instruction de télécommande ; et
une unité de réception (962), configurée pour recevoir, après l'envoi, par l'unité d'envoi, de la deuxième instruction de télécommande au dispositif périphérique qui correspond au sous-menu de périphérique activé, un résultat de télécommande qui est renvoyé par le dispositif périphérique qui correspond au sous-menu de périphérique activé, et afficher le résultat de télécommande au moyen de l'écran d'affichage du dispositif maître,
**caractérisé par** :
un septième module de réception (995), configuré pour recevoir, avant la réception de la première instruction de télécommande par le deuxième module de réception (93), une information de description de fonction de commande qui est envoyée par le dispositif périphérique qui correspond à l'option d'activation de sous-menu, ladite information de description de fonction de commande étant du dispositif périphérique qui correspond à l'option d'activation de sous-menu ; et
un module de génération et d'ajout (996), configuré pour générer, selon l'information de description de fonction de commande qui est reçue par le septième module de réception (995) et qui est du dispositif périphérique qui correspond à l'option d'activation de sous-menu, le sous-menu de périphérique qui correspond à l'option d'activation de sous-menu, et ajouter l'option d'activation de sous-menu au menu principal.

9. Dispositif maître selon la revendication 8, le menu principal comprenant en outre au moins une option de commande qui est utilisée pour réaliser une commande de fonction sur le dispositif maître ; et
le dispositif maître comprenant en outre :
un quatrième module de réception (97), configuré pour recevoir une troisième instruction de télécommande qui est envoyée par le dispositif de télécommande et qui est utilisée pour sélectionner l'option de commande ; et
un deuxième module de commande (98), configuré pour réaliser une commande sur le dispositif maître selon la troisième instruction de télécommande reçue par le quatrième module de réception.

10. Dispositif maître selon la revendication 8, le menu principal comprenant en outre une option d'activation principale qui est utilisée pour activer un sous-menu de maître qui correspond au dispositif maître, et le sous-menu de maître comprenant au moins une sous-option de commande qui est utilisée pour réaliser une commande de fonction sur le dispositif maître ; et
le dispositif maître comprenant en outre :
un cinquième module de réception (99), configuré pour recevoir une quatrième instruction de télécommande qui est envoyée par le dispositif de télécommande et qui est utilisée pour sélectionner l'option d'activation principale ;
un troisième module d'activation (991), configuré pour activer le sous-menu de maître selon la quatrième instruction de télécommande reçue par le cinquième module de réception (99) ;
un sixième module de réception (992), configuré pour recevoir, après l'activation du sous-menu de maître par le troisième module d'activation (991), une cinquième instruction de télécommande qui est envoyée par le dispositif de télécommande et qui est utilisée pour sélectionner la sous-option de commande dans le sous-menu de maître ; et
un troisième module de commande (993), configuré pour réaliser une commande sur le dispositif maître selon la cinquième instruction de télécommande reçue par le sixième module de réception (992).

11. Dispositif maître selon la revendication 8, dans lequel le premier module d'activation (92) est spécifiquement configuré pour acquérir le menu principal selon l'instruction de demande de menu principal et une relation de concordance préstockée entre une instruction et une adresse de stockage de menu principal, et afficher le menu principal au moyen d'un écran d'affichage du dispositif maître ; et
le deuxième module d'activation (94) est spécifiquement configuré pour acquérir, selon la première instruction de télécommande et une relation de concordance préstockée entre une instruction et une adresse de stockage de sous-menu, le sous-menu de périphérique qui correspond à l'option d'activation de sous-menu, et afficher, au moyen de l'écran d'affichage, le sous-menu de périphérique qui correspond à l'option d'activation de sous-menu.

12. Dispositif maître selon l'une quelconque des revendications 8 à 11, comprenant en outre :
un module d'envoi (994), configuré pour envoyer, avant la réception de la première instruction de télécommande par le deuxième module de réception (93), une instruction d'activation au dispositif périphérique qui correspond à l'option d'activation de sous-menu, de sorte que le dispositif périphérique qui correspond à l'option d'activation de sous-menu entre dans un état de travail.

13. Dispositif maître selon l'une quelconque des revendications 8 à 11, comprenant en outre :
un huitième module de réception (997), configuré pour recevoir, avant la réception de la première instruction de télécommande par le deuxième module de réception (93), une demande d'enregistrement qui est envoyée par le dispositif périphérique qui correspond à l'option d'activation de sous-menu, la demande d'enregistrement comprenant le sous-menu de périphérique qui correspond à l'option d'activation de sous-menu ; et
un module d'ajout (998), configuré pour ajouter l'option d'activation de sous-menu au menu principal.

14. Dispositif maître selon la revendication 11, dans lequel le fait que le premier module d'activation (92) est configuré pour afficher le menu principal au moyen d'un écran d'affichage du dispositif maître comprend le fait que : le premier module d'activation (92) est spécifiquement configuré pour afficher, dans un mode d'affichage horizontal ou vertical, au moins un sous-menu de périphérique dans le menu principal ; et
le fait que le deuxième module d'activation (94) est configuré pour afficher, au moyen de l'écran d'affichage, le sous-menu de périphérique qui correspond à l'option d'activation de sous-menu comprend le fait que : le deuxième module d'activation (94) est spécifiquement configuré pour afficher, dans un mode d'affichage horizontal ou vertical, l'au moins une sous-option de commande dans le sous-menu de périphérique qui correspond à l'option d'activation de sous-menu.

15. Système de télécommande, comprenant un dispositif de télécommande et un dispositif maître selon l'une quelconque des revendications 8 à 14, le dispositif de télécommande comprenant :
un premier module d'envoi (121), configuré pour envoyer une instruction de demande de menu principal à un dispositif maître, de sorte que le dispositif maître active un menu principal sur le dispositif maître selon l'instruction de demande de menu principal, le menu principal comprenant au moins une option d'activation de sous-menu, ladite au moins une option d'activation de sous-menu correspondant à un dispositif périphérique connecté au dispositif maître et étant utilisée pour activer un sous-menu de périphérique qui correspond au dispositif périphérique correspondant, et le sous-menu de périphérique comprenant au moins une sous-option de commande qui est utilisée pour réaliser une commande de fonction sur le dispositif périphérique qui correspond au sous-menu de périphérique ;
un deuxième module d'envoi (122), configuré pour, après l'envoi de l'instruction de demande de menu principal par le premier module d'envoi, envoyer, au dispositif maître, une première instruction de télécommande qui est utilisée pour sélectionner l'option d'activation de sous-menu, de sorte que le dispositif maître active, selon la première instruction de télécommande, le sous-menu de périphérique qui correspond à l'option d'activation de sous-menu ; et
un troisième module d'envoi (123), configuré pour, après l'envoi de la première instruction de télécommande par le deuxième module d'envoi, envoyer, au dispositif maître, une deuxième instruction de télécommande qui est utilisée pour sélectionner la sous-option de commande dans le sous-menu de périphérique activé, de sorte que le dispositif maître réalise, selon la deuxième instruction de télécommande, une commande sur le dispositif périphérique qui correspond au sous-menu de périphérique activé.

16. Système de télécommande selon la revendication 15, dans lequel le menu principal comprend en outre au moins une option de commande qui est utilisée pour réaliser une commande de fonction sur le dispositif maître ; et
le dispositif de télécommande comprend en outre :
un quatrième module d'envoi (124), configuré pour envoyer, au dispositif maître, une troisième instruction de télécommande qui est utilisée pour sélectionner l'option de commande, de sorte que le dispositif maître réalise une commande sur le dispositif maître lui-même selon la troisième instruction de télécommande.

17. Système de télécommande selon la revendication 16, dans lequel le menu principal comprend en outre une option d'activation principale qui est utilisée pour activer un sous-menu de maître qui correspond au dispositif maître, et le sous-menu de maître comprend au moins une sous-option de commande qui est utilisée pour réaliser une commande de fonction sur le dispositif maître ; et
le dispositif de télécommande comprend en outre :
un cinquième module d'envoi (125), configuré pour envoyer, au dispositif maître, une quatrième instruction de télécommande qui est utilisée pour sélectionner l'option d'activation principale, de sorte que le dispositif maître active le sous-menu de maître selon la quatrième instruction de télécommande ; et
un sixième module d'envoi (126), configuré pour, après l'envoi de la quatrième instruction de télécommande par le cinquième module d'envoi, envoyer, au dispositif maître, une cinquième instruction de télécommande qui est utilisée pour sélectionner la sous-option de commande dans le sous-menu de maître, de sorte que le dispositif maître réalise une commande sur le dispositif maître lui-même selon la cinquième instruction de télécommande.
